# EUROPEAN PATENT APPLICATION

(11) **EP 2 905 745 A1**
(43) Date of publication of application: **12.08.2015**
(21) Application number: 13842627.5
(22) Date of filing: 26.09.2013
(51) Int. Cl.: G06T 19/00, G06F 3/01, G06F 3/048

(54) **DISPLAY DEVICE, CONTROL SYSTEM, AND CONTROL PROGRAM**

(30) Priority: 27.09.2012 JP 2012214956
(71) Applicant: Kyocera Corporation, Kyoto-shi, Kyoto 612-8501 (JP)
(72) Inventor: UENO, Yasuhiro, Kyoto-shi Kyoto 612-8501 (JP); TANABE, Shigeki, Kyoto-shi Kyoto 612-8501 (JP)
(74) Representative: Schwabe - Sandmair - Marx
(86) International application number: PCT/JP2013/076065
(87) International publication number: WO 2014/050967

(57) **Abstract**

A display device (1) includes display units (32a and 32b) that display an electronic publication by displaying images respectively corresponding to both eyes of a user by being worn, a detection unit (44) that detects a plurality of bodies that performs operation of turning a page of the publication, and a control unit (22) that causes the display unit (32a) to display a newly displayed page of pages of the publication according to a detection result of the detection unit (44). The display unit (32a) may stereoscopically display the publication in a display space. In this case, the detection unit (44) detects positions of the plurality of bodies in the display space.

## Description

### FIELD

The present invention relates to a display device, a control system, and a control program.

### BACKGROUND

Among display devices that include a display unit, such as mobile phones, there are ones that can stereoscopically display images and the like (for example, see Patent Literature 1). The stereoscopic display is realized using binocular parallax.

### CITATION LIST

### PATENT LITERATURE

Patent Literature 1: JP 2011-95547 A

### SUMMARY

### TECHNICAL PROBLEM

Although the stereoscopic display is a display format that is friendly to users, the stereoscopic display has been used only for the purpose of viewing, and has not been used for improving convenience of operation in the conventional display devices. An objective of the present invention is to provide the user with a highly convenient operation method.

An objective of the present invention is to provide a display device, a control system, and a control program, which can provide the users with a highly convenient operation method.

### SOLUTION TO PROBLEM

According to one of aspects, a display device includes: a display unit configured to display an electronic publication by displaying images respectively corresponding to both eyes of a user by being worn; a detection unit configured to detect a body that performs operation of turning a page of the publication; and a control unit configured to cause the display unit to display a newly displayed page of pages of the publication according to a detection result of the detection unit.

According to another aspect, a control system includes a terminal and a control unit. The terminal includes: a display unit configured to display an electronic publication by displaying images respectively corresponding to both eyes of a user by being worn; and a detection unit configured to detect a plurality of bodies that performs operation of turning a page of the publication. The control unit is configured to control the terminal. The control unit causes the display unit to display a newly displayed page of pages of the publication according to a detection result of the detection unit.

According to another aspect, a control program causes a display device including a display unit and a detection unit to execute: displaying, by the display unit, an electronic publication by displaying images respectively corresponding to both eyes of a user by being worn; detecting, by the detection unit, a body that perform operation of turning a page of the publication; and displaying, by the display unit, a newly displayed page of pages of the publication according to a detection result of the detection unit.

### ADVANTAGEOUS EFFECTS OF INVENTION

The present invention exhibits an effect to provide the users with a highly convenient operation method.

### BRIEF DESCRIPTION OF DRAWINGS

FIG. 1 is a perspective view of a display device.
FIG. 2 is a diagram of the display device worn by a user as viewed from the front.
FIG. 3 is a diagram illustrating a modification of a display device.
FIG. 4 is a diagram illustrating another modification of a display device.
FIG. 5 is a diagram illustrating still another modification of a display device.
FIG. 6 is a block diagram of the display device.
FIG. 7 is a diagram illustrating one of examples of control based on a function provided by a control program.
FIG. 8 is a diagram illustrating one of examples of information stored in object data.
FIG. 9 is a diagram illustrating one of examples of information stored in acting data.
FIG. 10 is a flowchart illustrating a basic processing procedure for realizing a viewing function of a book.
FIG. 11 is a diagram for describing detection of operation performed by holding a three-dimensional object.
FIG. 12 is a diagram for describing detection of operation performed by holding a three-dimensional object.
FIG. 13 is a flowchart illustrating a processing procedure of selection detecting processing of a three-dimensional object.
FIG. 14 is a flowchart illustrating a processing procedure of holding operation detecting processing.
FIG. 15 is a diagram illustrating one of examples of a closed book.
FIG. 16 is a diagram illustrating one of examples of control of page turning.
FIG. 17 is a diagram illustrating another example of the control of page turning.
FIG. 18 is a diagram illustrating still another example of the control of page turning.
FIG. 19 is a diagram illustrating relationship between the number of turned pages and a distance between bodies.
FIG. 20 is a diagram illustrating one of examples of presenting a range of selected pages to a user.
FIG. 21 is a diagram illustrating one of examples of displaying contents of a page for presenting the range of selected pages to the user.
FIG. 22 is a diagram illustrating one of examples of operation of putting a mark on a page.
FIG. 23 is a diagram illustrating one of examples of a way of displaying a dog-ear.
FIG. 24 is a flowchart illustrating one of examples of a processing procedure of adjusting the range of selected pages.
FIG. 25 is a diagram illustrating one of examples of operation of putting a bookmark.
FIG. 26 is a diagram illustrating one of examples of operation of cutting off a page.
FIG. 27 is a diagram illustrating another example of the operation of cutting off a page.
FIG. 28 is a diagram illustrating one of examples of operation of cutting off a part of a page.
FIG. 29 is a diagram illustrating one of examples of control of when stereoscopically displaying a plurality of books.
FIG. 30 is a flowchart illustrating a processing procedure of processing of displaying another object in association with a page.
FIG. 31 is a diagram illustrating one of examples of displaying an object in association with a page.
FIG. 32 is a diagram illustrating one of examples of displaying an object in association with a page.
FIG. 33 is a diagram illustrating one of examples of displaying an object in association with a page.
FIG. 34 is a diagram illustrating one of examples of displaying an object in association with a page.
FIG. 35 is a diagram illustrating one of examples of displaying an object in association with a front and a back of a page.
FIG. 36 is a diagram illustrating one of examples of displaying an object in association with a front and a back of a page.
FIG. 37 is a diagram illustrating one of examples of displaying an object in association with a plurality of pages.
FIG. 38 is a diagram illustrating one of examples of displaying an object in association with a plurality of pages.

### DESCRIPTION OF EMBODIMENTS

Hereinafter, the present invention will be described in details with reference to the drawings. The present invention is not limited by the description below. Configuration elements in the description below include things which can be easily conceived by a person skilled in the art, which are substantially the same, and which are so-called equivalents.

### [Embodiment]

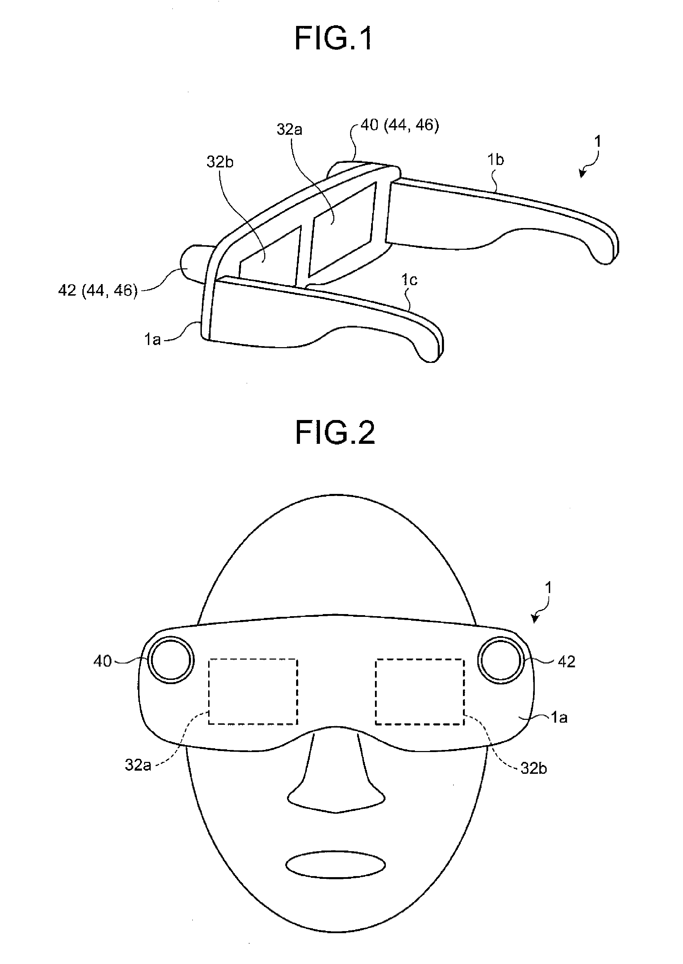

First of all, an overall configuration of a display device 1 according to a first embodiment will be described with reference to FIGS. 1 and 2. FIG. 1 is a perspective view of the display device 1. FIG. 2 is a diagram of the display device 1 worn by a user as viewed from the front. As illustrated in FIGS. 1 and 2, the display device 1 is a head mount type device that is worn on the head of the user.

The display device 1 includes a front portion 1a, a side portion 1b, and a side portion 1c. The front portion 1a is arranged in front of the user to cover both eyes of the user when being worn by the user. The side portion 1b is connected to one end portion of the front portion 1a, and the side portion 1c is connected to the other end portion of the front portion 1a. The side portion 1b and the side portion 1c are supported by ears of the user like temples of eyeglasses when being worn, and stabilize the display device 1. The side portion 1b and the side portion 1c may be configured to be connected at the rear of the head of the user when being worn.

The front portion 1a includes a display unit 32a and a display unit 32b on a side facing the eyes of the user when being worn. The display unit 32a is arranged at a position facing a right eye of the user when being worn, and the display unit 32b is arranged at a position facing a left eye of the user when being worn. The display unit 32a displays an image for the right eye, and the display unit 32b displays an image for the left eye. As described above, the display device 1 can realize three-dimensional display using binocular parallax by including the display units 32a and 32b that display the images corresponding to the respective eyes of the user when being worn.

The display units 32a and 32b may be configured from one display device as long as the device can independently provide different images for the right eye and the left eye of the user. For example, the one display device may be configured to independently provide the different images for the right eye and the left eye by quickly switching a shutter that shields one eye so that only the other eye can see a displayed image. The front portion 1a may be configured to cover the eyes of the user so that light from outside does not enter the eyes of the user when being worn.

The front portion 1a includes an imaging unit 40 and an imaging unit 42 on a face opposite to the face where the display unit 32a and the display unit 32b are provided. The imaging unit 40 is arranged near one end portion (a right eye side when being worn) of the front portion 1a, and the imaging unit 42 is arranged near the other end portion (a left eye side when being worn) of the front portion 1a. The imaging unit 40 acquires an image in a range corresponding to a field of view of the right eye of the user. The imaging unit 42 acquires an image in a range corresponding to a field of view of the left eye of the user. The field of view referred to here is, for example, a field of view of when the user sees the front.

The display device 1 displays an image captured by the imaging unit 40 in the display unit 32a as an image for the right eye, and displays an image captured by the imaging unit 42 in the display unit 32b as an image for the left eye. Therefore, the display device 1 can provide the user who wears the display device 1 with a scene similar to a scene that is viewed by the user who does not wear the display device 1, even if the field of view is shielded by the front portion 1a.

The display device 1 has a function to three-dimensionally display virtual information, and to enable the user to operate the virtual information, in addition to the function to provide the user with a real scene as described above. According to the display device 1, the virtual information is superimposed on the real scene and displayed as if actually existed. The user can operate the virtual information as if the user actually touched the virtual information using a hand, for example, and apply change such as movement, rotation, deformation, or the like to the virtual information. As described above, the display device 1 provides an intuitive and highly convenient operation method in regard to the virtual information. In the description below, the virtual information that is three-dimensionally displayed by the display device 1 may be called "three-dimensional object".

The display device 1 provides the user with a wide field of view similar to a case where the user does not wear the display device 1. Further, the display device 1 can arrange a three-dimensional object with an arbitrary size in an arbitrary position in the wide field of view. As described above, the display device 1 can display three-dimensional objects having various sizes in various positions in a wide space without limitation due to size of the display device.

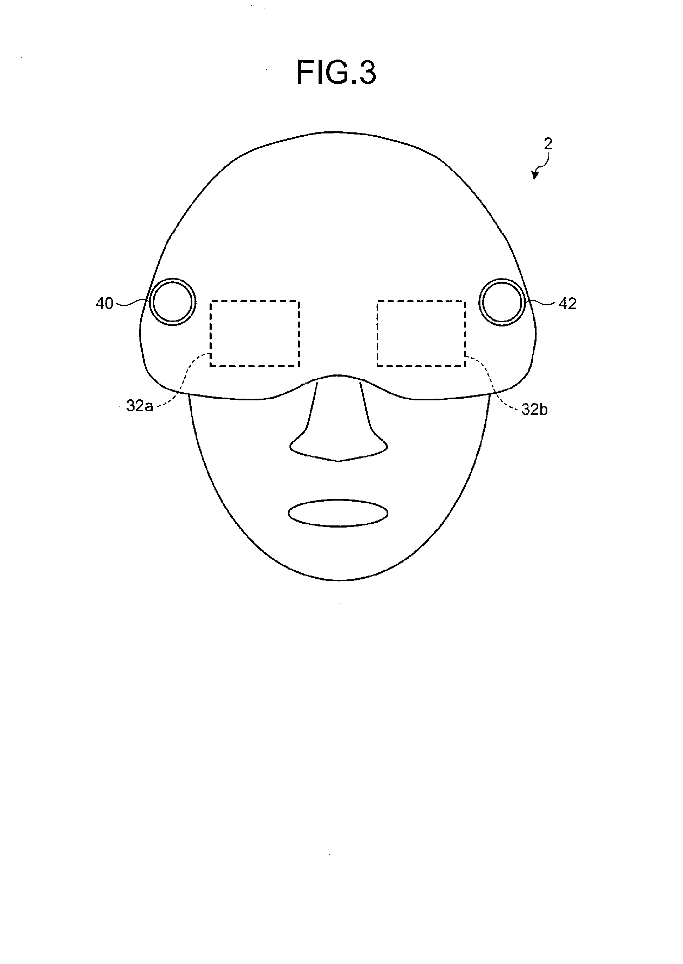

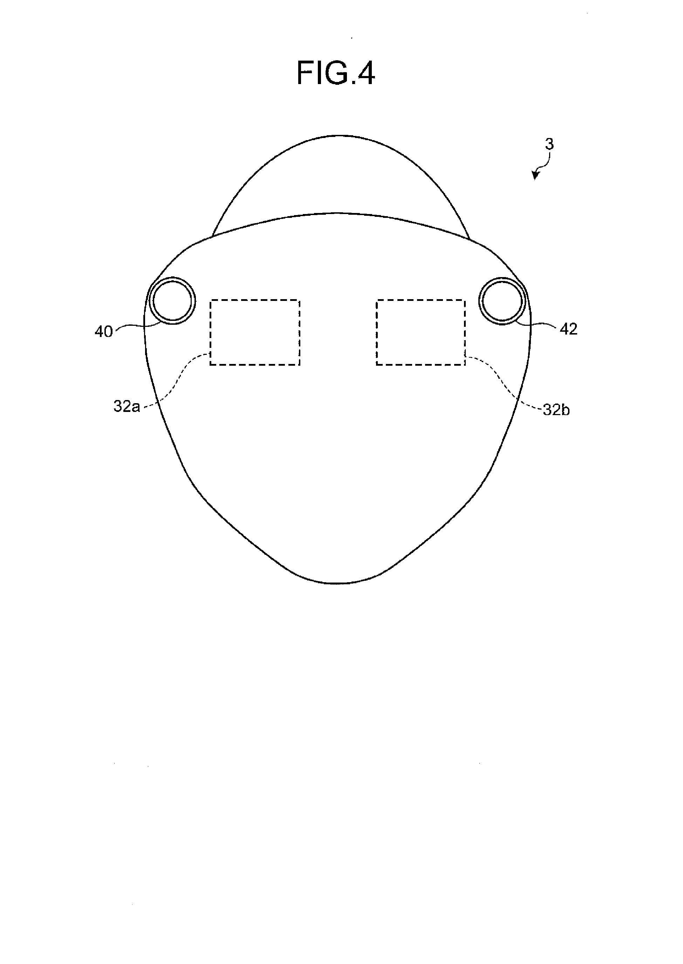

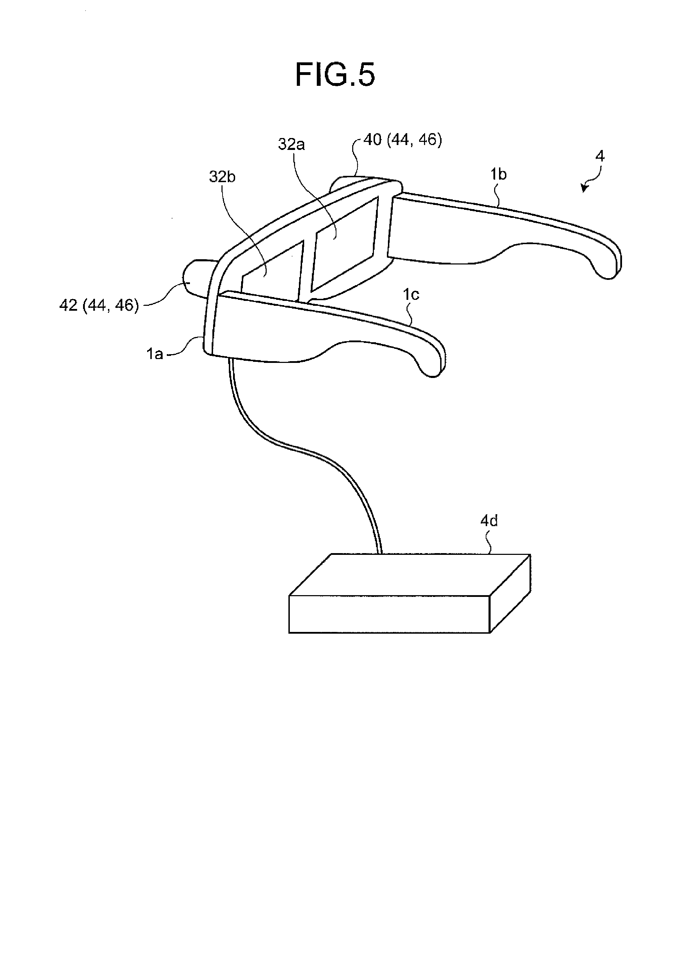

While, in FIGS. 1 and 2, one of examples in which the display device 1 has a shape of eyeglasses (goggles) has been described, the shape of the display device 1 is not limited thereto. For example, the display device 1 may have a helmet-type shape that substantially covers an upper half of the head of the user, like a display device 2 illustrated in FIG. 3. Alternatively, the display device 1 may have a mask-type shape that substantially covers the entire face of the user, like a display device 3 illustrated in FIG. 4. The display device 1 may be configured to be connected with an external device 4d such as an information processing device or a battery device in a wireless or wired manner, like a display device 4 illustrated in FIG. 5.

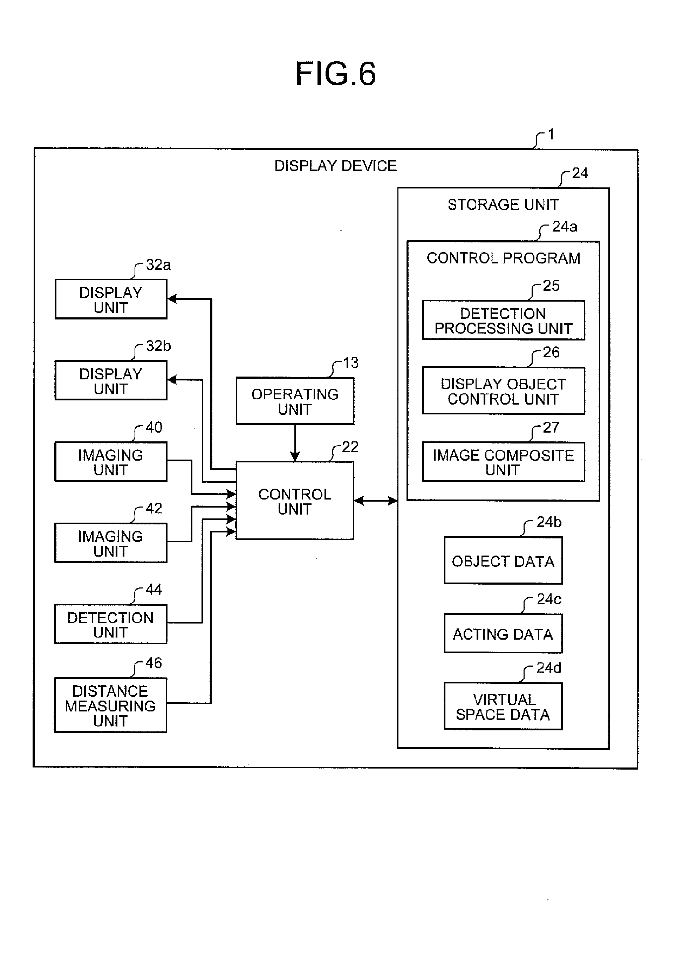

Then, a functional configuration of the display device 1 will be described with reference to FIG. 6. FIG. 6 is a block diagram of the display device 1. As illustrated in FIG. 6, the display device 1 includes an operating unit 13, a control unit 22, a storage unit 24, the display units 32a and 32b, the imaging units 40 and 42, a detection unit 44, and a distance measuring unit 46. The operating unit 13 receives basic operations such as activation, stop, and change of an operation mode of the display device 1.

The display units 32a and 32b include a display device such as a liquid crystal display or an organic electro-luminescence panel, and displays various types of information according to a control signal input from the control unit 22. The display units 32a and 32b may be projection devices that project images on retinas of the user using a light source such as a laser beam or the like.

The imaging units 40 and 42 electronically capture images using an image sensor such as a charge coupled device image sensor (CCD) or a complementary metal oxide semiconductor (CMOS). The imaging units 40 and 42 convert the captured images into signals, and output the signals to the control unit 22.

The detection unit 44 detects a real body existing in image ranges of the imaging units 40 and 42. For example, the detection unit 44 detects a body that is matched with a shape registered in advance (for example, a shape of a hand of a human), among real bodies existing in the image ranges. Even about a body, the shape of which is not registered in advance, the detection unit 44 may detect a range (the shape and the size) of the real body in the image based on brightness and/or chroma of pixels, edges of hue, and the like.

The distance measuring unit 46 measures distances to the real body existing in the image ranges of the imaging units 40 and 42. The distances to the real body are measured, for respective eyes, with respect to the positions of the respective eyes of the user who wears the display device 1. Therefore, when reference positions with which the distance measuring unit 46 measures the distances are deviated from the positions of the respective eyes, measured values of the distance measuring unit 46 are corrected to express the distances to the positions of the eyes according to the deviation.

In the present embodiment, the imaging units 40 and 42 function as both of the detection unit 44 and the distance measuring unit 46. That is, in the present embodiment, the imaging units 40 and 42 detect the body in the image ranges by analyzing the images captured by the imaging units 40 and 42. Further, the imaging units 40 and 42 measure (calculate) the distance to the body by comparing the body included in the image captured by the imaging unit 40 and the body included in the image captured by the imaging unit 42.

The display device 1 may include the detection unit 44 separately from the imaging units 40 and 42. The detection unit 44 may be a sensor that detects the real body existing in the image ranges using at least one of visible light, infrared light, ultraviolet rays, a radio wave, a sound wave, magnetism, and capacitance, for example. The display device 1 may include the distance measuring unit 46 separately from the imaging units 40 and 42. The distance measuring unit 46 may be a sensor that detects the distance to the real body existing in the image ranges using at least one of the visible light, infrared light, ultraviolet rays, a radio wave, a sound wave, magnetism, and capacitance, for example. The display device 1 may include a sensor that can function as both of the detection unit 44 and the distance measuring unit 46, like a sensor using a time-of-flight (TOF) method.

The control unit 22 includes a central processing unit (CPU) as calculation means, and a memory as storage means, and realizes various functions by executing a program using these hardware resources. To be specific, the control unit 22 reads out a program and data stored in the storage unit 24 and loads the program and data to the memory, and causes the CPU to execute commands included in the program loaded to the memory. The control unit 22 then reads/writes data from/to the memory and the storage unit 24, and controls operations of the display unit 32a and the like, according to execution results of the commands by the CPU. When the CPU executes the commands, the data loaded to the memory, and the operation detected through the detection unit 44 are used as a part of parameters or determination conditions.

The storage unit 24 is constituted of a nonvolatile storage device such as a flash memory, and stores therein various programs and data. The programs stored in the storage unit 24 include a control program 24a. The data stored in the storage unit 24 include object data 24b, acting data 24c, and virtual space data 24d. The storage unit 24 may be configured by a combination of a portable storage medium such as a memory card, and a read/write device that perform reading/writing from/to the storage medium. In this case, the control program 24a, the object data 24b, the acting data 24c, and the virtual space data 24d may be stored in the storage medium. Further, the control program 24a, the object data 24b, the acting data 24c, and the virtual space data 24d may be acquired from another device such as a server by wireless or wired communication.

The control program 24a provides functions related to various types of control for operating the display device 1. The functions provided by the control program 24a include a function to superimpose a three-dimensional object on the images acquired by the imaging units 40 and 42 and display the superimposed images in the display units 32a and 32b, a function to detect operation to the three-dimensional object, a function to change the three-dimensional object according to the detected operation, and the like. The control program 24a enables the user to enjoy an electronic publication as described below by controlling display of a three-dimensional object, detecting the operation with respect to a three-dimensional object, and the like.

The control program 24a includes a detection processing unit 25, a display object control unit 26, and an image composite unit 27. The detection processing unit 25 provides a function for detecting the real body existing in the image ranges of the imaging units 40 and 42. The function provided by the detection processing unit 25 includes a function to measure the distances to the detected respective bodies.

The display object control unit 26 provides a function for managing what types of three-dimensional objects are arranged in a virtual space, and in what state each of the three-dimensional objects is. The function provided by the display object control unit 26 includes a function to detect the operation to the three-dimensional object based on movement of the real body detected by the function of the detection processing unit 25, and change the three-dimensional object based on the detected operation.

The image composite unit 27 provides a function for generating an image to be displayed in the display unit 32a and an image to be displayed in the display unit 32b by compositing an image in a real space and an image in the virtual space. The function provided by the image composite unit 27 includes a function to determine front and rear relationship between the real body and the three-dimensional object, and adjust overlapping, based on the distance to the real body measured by the function of the detection processing unit 25, and the distance from a view point in the virtual space to the three-dimensional object.

The object data 24b includes information related to the shape and the properties of the three-dimensional object. The object data 24b is used for displaying the three-dimensional object. The acting data 24c includes information related to how the operation to the displayed three-dimensional object acts on the three-dimensional object. The acting data 24c is used for determining how to change the three-dimensional object when the operation to the displayed three-dimensional object is detected. The change referred to here includes movement, rotation, deformation, disappearance, and the like. The virtual space data 24d holds information related to a state of the three-dimensional object arranged in the virtual space. The state of the three-dimensional object includes, for example, a position, an attitude, a status of deformation, and the like.

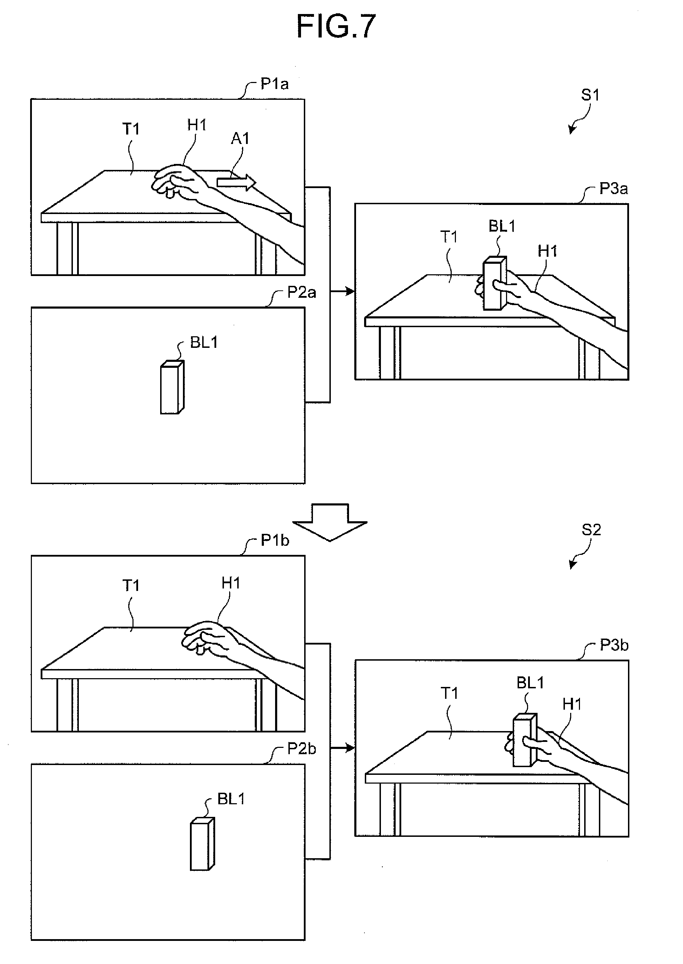

Then, one of examples of control based on the functions provided by the control program 24a will be described with reference to FIG. 7. An image P1a is an image obtained by the imaging unit 40, that is, an image corresponding to a scene of the real space viewed by the right eye. In the image P1a, a table T1 and a hand H1 of the user appear. The display device 1 also acquires an image of the same scene imaged by the imaging unit 42, that is, an image corresponding to a scene of the real space viewed by the left eye.

An image P2a is an image for the right eye generated based on the virtual space data 24d and the object data 24b. In this example, the virtual space data 24d holds information related to a state of a block-like three-dimensional object BL1 existing in the virtual space, and the object data 24b holds information related to the shape and the properties of the three-dimensional object BL1. The display device 1 reproduces a virtual space based on these pieces of information, and generates the image P2a that is the reproduced virtual space viewed from a view point of the right eye. The position of the right eye (view point) in the virtual space is determined based on a predetermined rule. Similarly, the display device 1 also generates an image that is the reproduced virtual space viewed from a view point of the left eye. That is, the display device 1 also generates an image that causes the three-dimensional object BL1 to be three-dimensionally displayed in combination with the image P2a.

At Step S1 illustrated in FIG. 7, the display device 1 composites the image P1a and the image P2a to generate an image P3a. The image P3a is an image to be displayed in the display unit 32a as an image for the right eye. At this time, the display device 1 determines the front and rear relationship between the real body existing in the image range of the imaging unit 40 and the three-dimensional object existing in the virtual space using the position of the right eye of the user as a reference point. Then, when the real body and the three-dimensional object overlap with each other, the display device 1 adjusts the overlapping such that one that is closer to the right eye of the user can be seen in front.

Such adjustment of overlapping is performed for each range (for example, for each pixel) of a predetermined size within a region on the image where the real body and the three-dimensional object overlap with each other. Therefore, the distance from a view point to the real body in the real space is measured for each range of a predetermined size on the image. Further, the distance from the view point to the three-dimensional object in the virtual space is calculated for each range of a predetermined size on the image in consideration of the position, the shape, the attitude, and the like of the three-dimensional object.

In the scene of Step S1 illustrated in FIG. 7, in the virtual space, the three-dimensional object BL1 is arranged at a position corresponding to right above a position where the table T1 exists in the real space. Further, in the scene of Step S1 illustrated in FIG. 7, the hand H1 of the user and the three-dimensional object BL1 exist in substantially the same distance in substantially the same direction, using the position of the right eye of the user as a reference point. Therefore, the overlapping is adjusted for each range of a predetermined size, so that the hand H1 appears in front in a portion corresponding to the thumb of the hand H1, and the three-dimensional object BL1 appears in front in other portions, of a region where the hand H1 and the three-dimensional object BL1 overlap with each other, in the composited image P3a. Further, the three-dimensional object BL1 appears in front in a region where the table T1 and the three-dimensional object BL1 overlap with each other.

With such adjustment of overlapping, at Step S1 illustrated in FIG. 7, the image P3a that can be seen as if the three-dimensional object BL1 were placed on the table T1 and the user held the three-dimensional object BL1 by hand H1 is obtained. By similar processing, the display device 1 composites the image captured by the imaging unit 42, and the image of the virtual space viewed from the view point of the left eye to generate an image to be displayed in the display unit 32b as an image for the left eye. When the image for the left eye is generated, the overlapping of the real body and the three-dimensional object is adjusted using the position of the left eye of the user as a reference point.

The display device 1 displays the composite images generated as described above in the display units 32a and 32b. As a result, the user can see the scene that is as if the three-dimensional object BL1 were placed on the table T1, and the user held the three-dimensional object BL1 with own hand H1.

In the scene of Step S1 illustrated in FIG. 7, the user moves the hand H1 in a direction of an arrow A1.

In this case, in the scene of Step S2 illustrated in FIG. 7, an image obtained by the imaging unit 40 is changed into an image P1b in which the position of the hand H1 is moved to the right. Further, the display device 1 determines that the movement of the hand H1 is operation to move the three-dimensional object to the right while holding the three-dimensional object, and moves the position of the three-dimensional object to the right in the virtual space according to the operation. The movement of the three-dimensional object in the virtual space is reflected in the virtual space data 24d. As a result, the image for the right eye generated based on the virtual space data 24d and the object data 24b is changed to an image P2b in which the position of the three-dimensional object BL1 is moved in the right. Details of detection of the operation by the display device 1 will be described below.

The display device 1 composites the image P1b and the image P2b to generate an image P3b for the right eye. The image P3b is an image that can be seen as if the user held the three-dimensional object BL1 with the hand H1 at a more right side on the table T1 than the image P3a. Similarly, the display device 1 generates a composite image for the left eye. The display device 1 then displays the composite images generated as described above in the display units 32a and 32b. As a result, the user can see the scene that is as if the own hand H1 had held the three-dimensional object BL1 and moved it to the right.

Such update of the composite images for display is executed at a frequency (for example, 30 times per second) equivalent to a typical frame rate of a moving image. As a result, the change of the three-dimensional object BL1 according to the operation of the user is reflected to the image to be displayed in the display device 1 substantially in real time, and the user can operate the three-dimensional object BL1 as if the object actually existed, without a feeling of strangeness. Further, in the configuration according to the present embodiment, the hand H1 of the user, which operates the three-dimensional object BL1, is not positioned between the eyes of the user and the display units 32a and 32b, and thus the user can perform operation without caring about the display of the three-dimensional object BL1 being shielded by the hand H1.

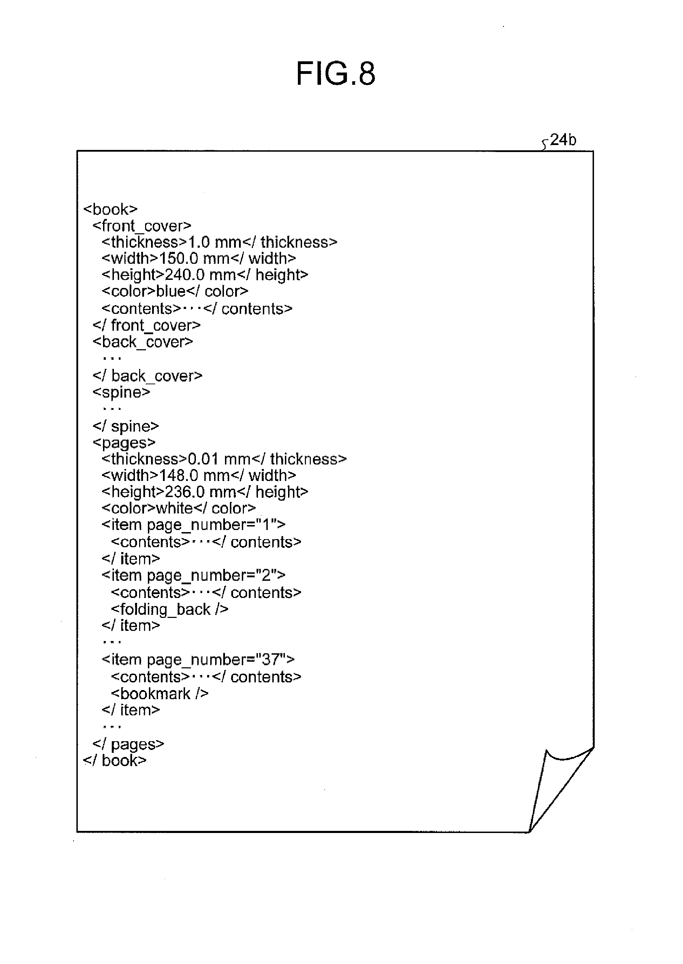

Then, the object data 24b and the acting data 24c illustrated in FIG. 6 will be further described in detail with reference to FIG. 8. FIG. 8 is a diagram illustrating one of examples of information stored in the object data 24b. The example illustrated in FIG. 8 is an example of information related to three-dimensional objects displayed as a book. As illustrated in FIG. 8, the three-dimensional objects displayed as a book include a plurality of three-dimensional objects of a front cover, a back cover, a spine, and a plurality of pages. That is, the three-dimensional objects displayed as a book are an aggregation of the three-dimensional objects. Note that, in the description below, the three-dimensional objects displayed as a book may be simply called "book". Similarly, the three-dimensional objects corresponding to the front cover, the back cover, the spine, and the pages may be simply called "front cover", "back cover", "spine", and "pages", respectively.

Information for specifying the appearance and properties such as the thickness, width, height, and a color is set to the front cover, the back cover, and the spine, in advance. Further, a character string, an image, and the like to be displayed on surface of the three-dimensional object are set to the front cover, the back cover, and the spine, as contents in a predetermined format.

Information for specifying the appearance and properties such as the thickness, width, height, and a color is commonly set to the plurality of pages, in advance. Further, texts, an image, and the like to be displayed on each of the pages are set to each of the plurality of pages, as contents in a predetermined format. Information specific to a page, such as "<folding_back />", "<bookmark />", may sometimes be added to the page. The "<folding_back />" indicates that a part of the corresponding page is folded back. The "<bookmark />" indicates that a bookmark is put on the corresponding page.

In FIG. 8, one of examples in which the object data 24b is described in the extensible markup language (XML) format has been described. However, the format of the object data 24b is not limited thereto. For example, the format of the object data 24b may be a specially designed format. The configuration of the three-dimensional objects displayed as a book is not limited to the example illustrated in FIG. 8. For example, the three-dimensional objects displayed as a book may not include the information for specifying the shape and properties of the front cover, the back cover, and the spine. In this case, the front covers, the back covers, and the spines of all of books may have common shape and properties according to setting performed in advance.

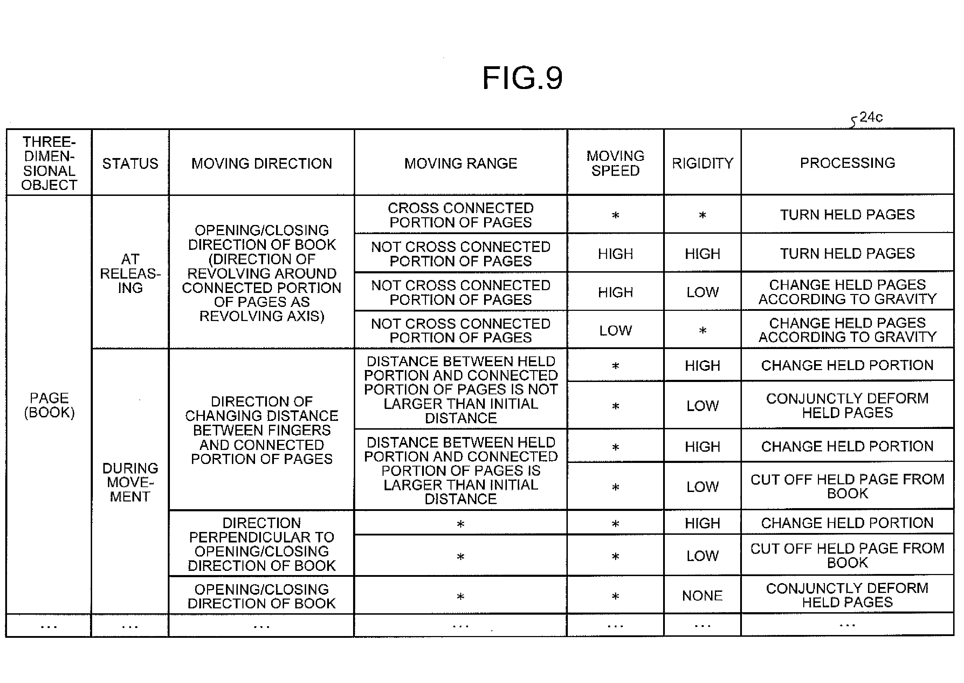

FIG. 9 is a diagram illustrating one of examples of information stored in the acting data 24c. The example illustrated in FIG. 9 indicates how operation to the pages included in a book acts on the pages. Note that, in the present embodiment, the operation to the pages is supposed to be operation performed by holding a part of the pages with fingers, or the like, for example.

As illustrated in FIG. 9, an action of the operation to the pages varies according to conditions such as a status, a moving direction, a moving range, a moving speed, and rigidity. The status indicates either at releasing, that is at the time when the holding operation has been completed, or during movement, that is, during the holding operation. The moving direction is a direction into which the fingers or the like that hold the pages move. The moving range is a range in which the fingers or the like that hold the pages move. The moving speed is a speed at which the fingers or the like that hold the pages move. The rigidity indicates hardness of the pages. The rigidity is determined based on the thickness of the pages.

Assume that the status is at releasing, and the immediately preceding direction of the fingers or the like that hold the pages is an opening/closing direction of the book, that is, a direction of revolving around a connected portion of the pages as a revolving axis. In this case, if the moving range of the fingers or the like crosses the connected portion of the pages, that is, the fingers or the like are moved across the connected portion of the pages, the display device 1 changes the pages such that the held pages are turned. When the moving range of the fingers or the like does not cross the connected portion of the pages but the moving speed is larger than a threshold and the rigidity is larger than a threshold, the display device 1 changes the held pages such that the pages are turned. When the moving range of the fingers or the like does not exceed the connected portion of the pages, and when the moving speed is smaller than the threshold, or the rigidity is smaller than the threshold, the display device 1 changes the held pages according to the gravity. The change according to the gravity is expressed as falling in the gravity direction, for example.

Assume that the status is during movement, and the moving direction of the fingers or the like that hold the pages is a direction of changing the distance between the fingers and the connected portion of the pages. In this case, if the rigidity of the pages is larger than a threshold, the display device 1 changes a held position. When the rigidity of the pages is smaller than the threshold, and when the distance between the held portion and the connected portion of the pages is not larger than an initial distance, the display device 1 changes the held pages in accordance with the movement of the fingers or the like. When the rigidity of the pages is smaller than the threshold and the distance between the held portion and the connected portion of the pages is larger than the initial one, the display device 1 changes the held pages such that the pages are cut off. That is, the display device 1 separates the held pages from the book.

When the moving direction of the fingers or the like that hold the pages is a direction perpendicular to the opening/closing direction of the book, and the rigidity of the pages is larger than a threshold, the display device 1 changes the held position. When the moving direction of the fingers or the like that hold the pages is the direction perpendicular to the opening/closing direction of the book, and the rigidity of the pages is smaller than the threshold, the display device 1 changes the held pages such that the pages are cut off. When the moving direction of the fingers or the like that hold the page is the opening/closing direction of the book, the display device 1 changes the held pages in accordance with the movement of the fingers or the like.

As described above, the information is set to the acting data 24c such that the pages are changed according to the operation similarly to pages of an actual book. Similar setting to the pages is also made in the acting data 24c in regard to the front cover and the back cover. Note that the configuration and the details of the acting data 24c are not limited to the example illustrated in FIG. 9. For example, the acting data 24c may include a condition other than the conditions illustrated in FIG. 9. The action defined in the acting data 24c may be different from the example illustrated in FIG. 9.

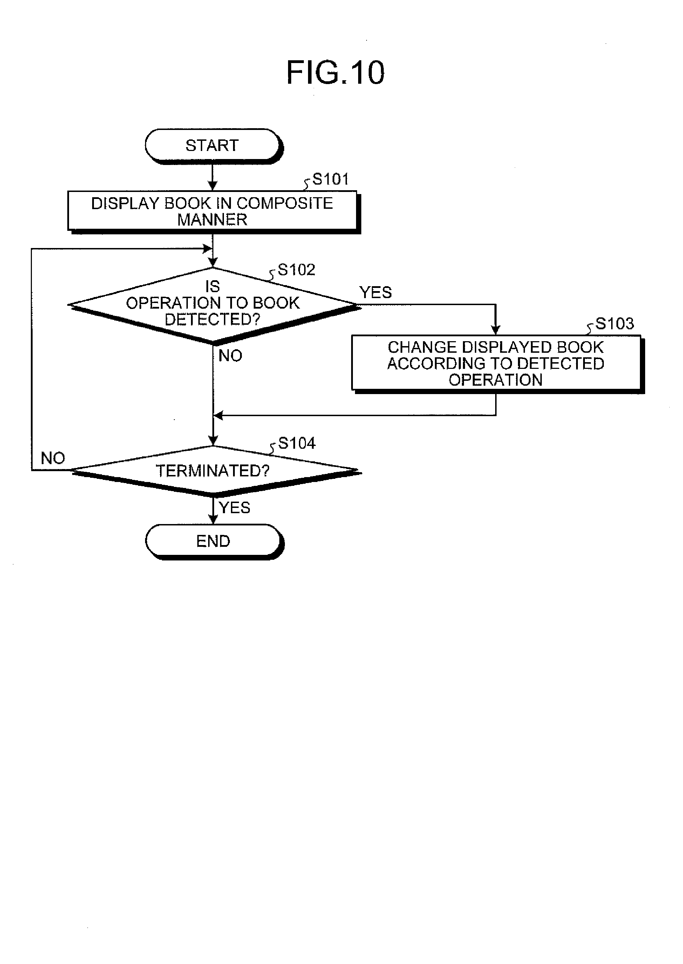

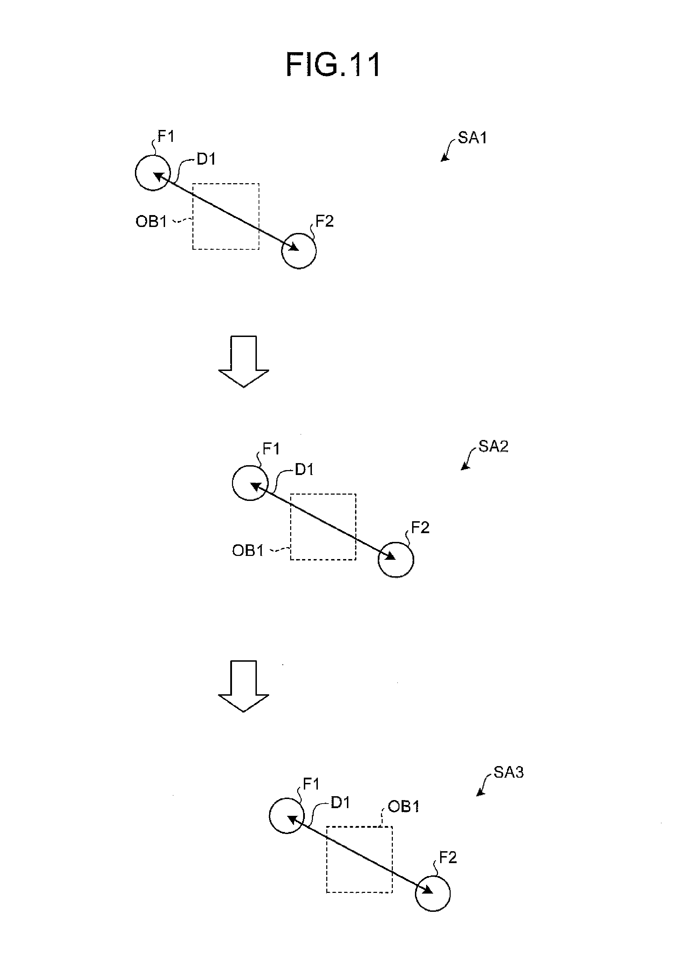

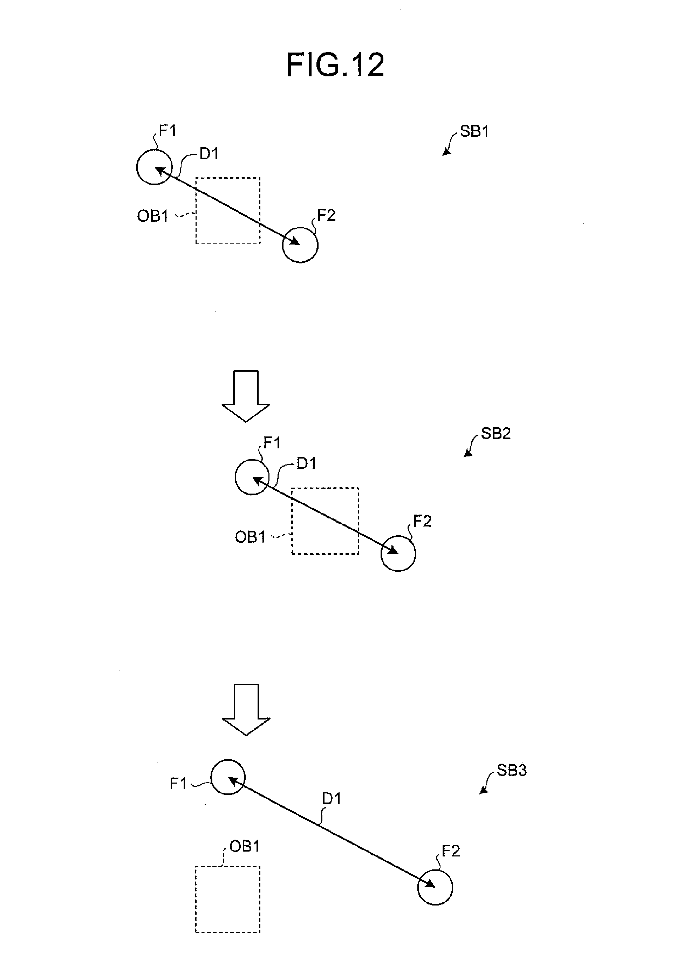

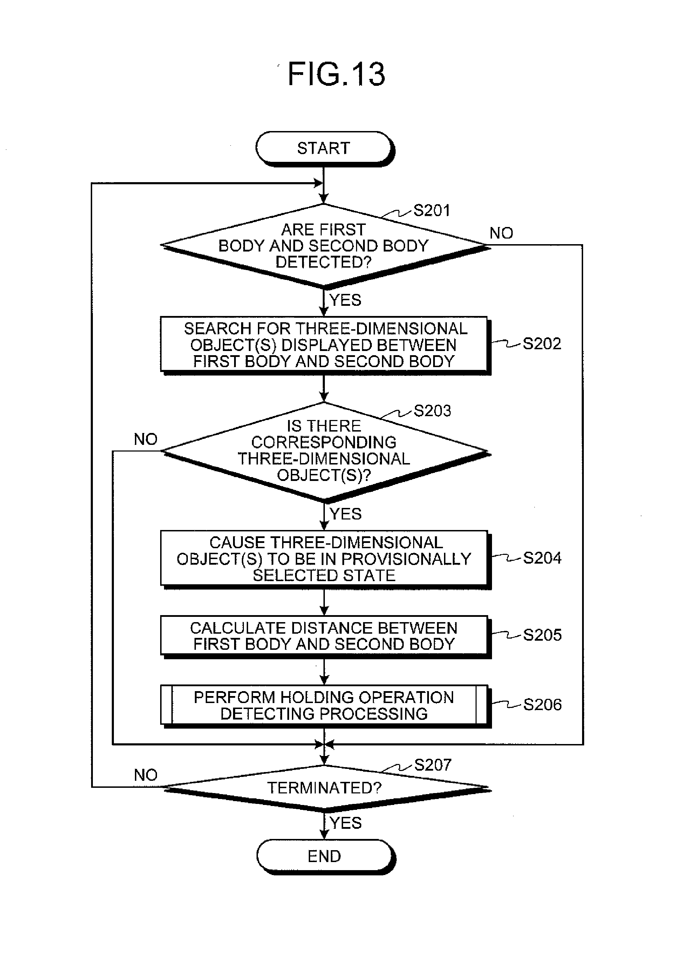

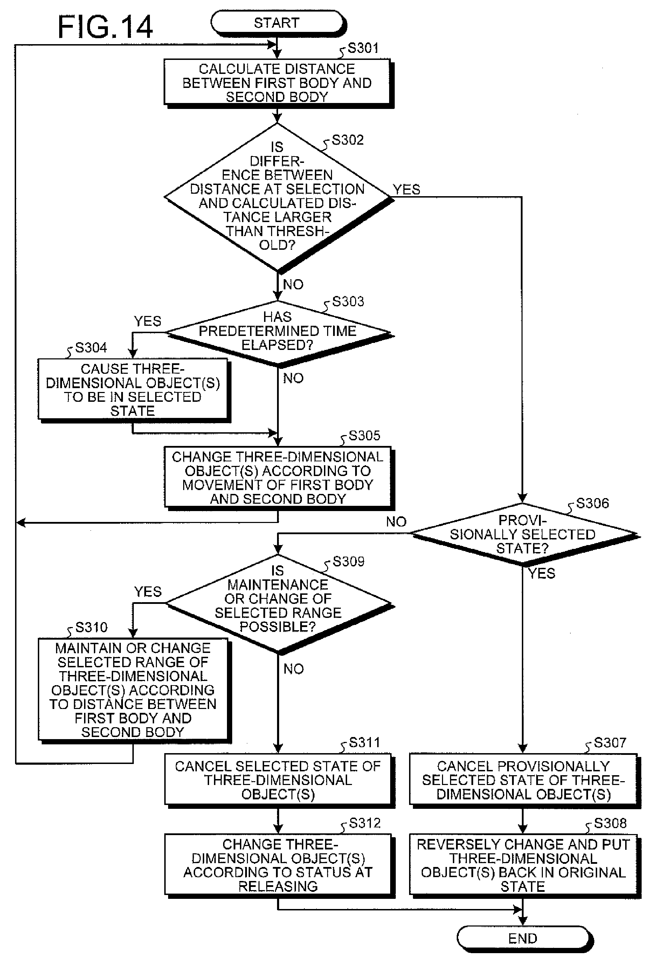

Then, an operation executed by the display device 1 for realizing the viewing function of a book will be described with reference to FIGS. 10 to 14. In the description below, a space viewed by the user who wears the display device 1 may be called display space. FIG. 10 is a flowchart illustrating a basic processing procedure executed by the display device 1 in order to realize the viewing function of a book. FIGS. 11 and 12 are diagrams for describing detection of operation performed by holding the three-dimensional object. FIG. 13 is a flowchart illustrating a processing procedure of selection detecting processing of the three-dimensional object. FIG. 14 is a flowchart illustrating a processing procedure of holding operation detecting processing.

The processing procedure illustrated in FIG. 10 is realized by the control unit 22 executing the control program 24a. As illustrated in FIG. 10, to realize the viewing function of a book, first of all, at Step S101, the control unit 22 composites and displays an image in the virtual space including a book and an image in the real space, in the display units 32a and 32b. The appearance and contents of the book to be displayed are determined based on the object data 24b.

Subsequently, at Step S102, the control unit 22 determines whether operation to the book has been detected. The operation to the book is detected based on the images captured by the imaging units 40 and 42. When the operation to the book has been detected (Yes at Step S102), then at Step S103, the control unit 22 changes the displayed book according to the detected operation. The way of changing the book in accordance with the detected operation is determined based on the acting data 24c. When the operation to the book is not detected (No at Step S102), the displayed book is kept as it is.

Subsequently, at Step S104, the control unit 22 determines whether the processing is terminated. For example, when the user performs predetermined operation of instructing the termination of the viewing function of the book, the control unit 22 determines that the processing is terminated. When the processing is terminated (Yes at Step S104), the control unit 22 completes the processing procedure illustrated in FIG. 10. When the processing is not terminated (No at Step S104), the control unit 22 re-executes Step S102 and the subsequent steps.

As described above, in the present embodiment, the operation to the book is supposed to be operation performed by holding the pages with the fingers or the like, for example. That is, at Step S102 illustrated in FIG. 10, the operation performed by holding the pages is detected, and at Step S103, the processing corresponding to the operation performed by holding the pages is executed.

Hereinafter, details of control related to the operation performed by holding the pages will be described with reference to FIGS. 11 to 14. At Step SA1 illustrated in FIG. 11, a three-dimensional object OB1 is stereoscopically displayed in the display space by the display units 32a and 32b. To select the three-dimensional object OB1, the user moves a finger F1 and a finger F2 such that the three-dimensional object OB1 is positioned between the finger F1 and the finger F2.

When two bodies have been detected in the display space, and the three-dimensional object OB1 is positioned between the two bodies, the display device 1 monitors change of a distance D1 between the two bodies. When the distance D1 is kept substantially constant for a predetermined time or more, the display device 1 determines that the three-dimensional object OB1 has been selected, and causes the three-dimensional object OB1 to be in a selected state. The display device 1 then notifies the user of the fact that the three-dimensional object OB1 is in the selected state by changing a display style of the three-dimensional object OB1, or the like.

The fact that three-dimensional object OB1 is in the selected state is notified to the user by changing the color or the brightness around portions that intersect with a straight line that connects the detected two bodies, of a surface of the three-dimensional object OB1, for example. Notification with a sound or vibration may be performed in place of, or in addition to the visual notification.

While the display device 1 monitors the change of the distance D1 between the two bodies, the two bodies do not necessarily stay in a position where the two bodies sandwich the three-dimensional object OB1. That is, the user may move the finger F1 and the finger F2 to another position without keeping the state after moving the finger F1 and the finger F2 such that the three-dimensional object OB1 is positioned between the finger F1 and the finger F2, as illustrated in Step SA1. For example, the user may start an operation of turning the held pages after moving the finger F1 and the finger F2 to the position where the fingers sandwich the pages to be held and before being notified of the fact that the held pages are in the selected state.

Assume that the user moves the finger F1 and the finger F2 from the state of Step SA1 while keeping the distance D1 between the finger F1 and the finger F2 substantially constant, as illustrated in Step SA2. In this case, the display device 1 applies change such as movement, rotation, or the like to the three-dimensional object OB1 from a stage where it is detected that the three-dimensional object OB1 is displayed between the finger F1 and the finger F2, that is, from a stage of Step SA1, according to the movement of the finger F1 and the finger F2. Then, as illustrated in Step SA3, the display device 1 causes the three-dimensional object OB1 to be in a selected state at a stage where the state in which the distance D1 between the finger F1 and the finger F2 is kept substantially constant is continued for a predetermined time or more.

As illustrated in Steps SB1 to SB3 of FIG. 12, when the distance D1 between the finger F1 and the finger F2 is separated before the predetermined time elapses, the display device 1 gives the three-dimensional object OB1 a change reverse to the change which has been applied so far. That is, when the user did not intend to operate the three-dimensional object OB1, the three-dimensional object OB1 is put back in an original state. As a result, the three-dimensional object OB1 is displayed at the same position in the same state as the stage of Step SB1. The speed at which the reverse change is applied to the three-dimensional object OB1 may be faster than the speed at which the change has been applied to the three-dimensional object OB1 so far. That is, the three-dimensional object OB1 may be reversely changed as if the three-dimensional object OB1 was reversely reproduced at a high speed.

As described above, starting to add the change to the three-dimensional object at the stage where it is detected that the three-dimensional object is displayed between the two bodies, the user can recognize that the three-dimensional object is getting selected before the selection is determined. As a result, the user can get to know whether an intended three-dimensional object has been selected at an early stage. The three-dimensional object, to which the change is being applied, may be displayed in a different form (for example, translucent) from a normal time and the selected state, until the state where the distance between the two bodies is kept substantially constant is continued for the predetermined time or more, so that the user can easily discriminate a state of the three-dimensional object.

The three-dimensional object OB1 may be started to change after the three-dimensional object OB1 becomes in the selected state, instead of being changed according to the movement of the finger F1 and the finger F2 from the stage of Step SA1. The three-dimensional object OB1 may be caused to be the selected state only when the state in which the three-dimensional object OB1 is positioned between the finger F1 and the finger F2 is continued for the predetermined time or more, as illustrated in Step SA1,

While, in FIG. 11, one of examples of selecting one three-dimensional object OB1 displayed between the two bodies has been described, the number of the three-dimensional objects to be selected is not limited to one. When it is detected that a plurality of three-dimensional objects are displayed between the two bodies, the display device 1 collectively selects the three-dimensional objects. That is, the display device 1 allows the user to collectively select a plurality of pages, and operate the pages.

FIG. 13 illustrates a processing procedure of selection detecting processing of the three-dimensional object. The processing procedure illustrated in FIG. 13 is realized by the control unit 22 executing the control program 24a. As illustrated in FIG. 13, at Step S201, the control unit 22 determines whether the detection unit 44, that is, the imaging units 40 and 42 have detected a first body and a second body. The first body and the second body are fingers of the user, for example.

When the first body and the second body have been detected (Yes at Step S201), then at Step S202, the control unit 22 searches displayed three-dimensional objects for a three-dimensional object(s) displayed between the first body and the second body.

When the three-dimensional object(s) displayed between the first body and the second body has been found (Yes at Step S203), then at Step S204, the control unit 22 causes the three-dimensional object(s) displayed between the first body and the second body to be in a provisionally selected state. When a plurality of three-dimensional objects is displayed between the first body and the second body, the control unit 22 causes all of the three-dimensional objects to be in the provisionally selected state. At Step S205, the control unit 22 calculates the distance between the first body and the second body. Then, at Step S206, the control unit 22 executes holding operation detecting processing illustrated in FIG. 14, and changes the three-dimensional object(s) in the selected state according to detected operation in the processing.

When the three-dimensional object(s) displayed between the first body and the second body is not found (No at Step S203), Steps S204 to S206 are not executed.

Thereafter, at Step S207, the control unit 22 determines whether the processing is terminated. When the processing is terminated (Yes at Step S207), the control unit 22 completes the processing procedure. When the processing is not terminated (No at Step S207), the control unit 22 re-executes Step S201 and the subsequent steps.

When the first body and the second body are not detected (No at Step S201), the control unit 22 executes Step S207.

FIG. 14 illustrates a processing procedure of the holding operation detecting processing. The processing procedure illustrated in FIG. 14 is realized by the control unit 22 executing the control program 24a. As illustrated in FIG. 14, first of all, at Step S301, the control unit 22 calculates the distance between the first body and the second body. Then, at Step S302, the control unit 22 determines whether a difference between the distance at the time of selecting the three-dimensional object(s), that is, the distance at start timing of the holding operation detecting processing, and a distance measured at Step S301 is larger than a threshold. The threshold used here is a value for determining whether the distance between the first body and the second body is substantially the same as the distance at the time of selecting the three-dimensional object.

When the difference between the distances is smaller than the threshold (No at Step S302), at Step S303, the control unit 22 determines whether a predetermined time has elapsed since the holding operation detecting processing is started. When the predetermined time has elapsed (Yes at Step S303), then at Step S304, the control unit 22 causes the three-dimensional object(s) to be in the selected state if there is a three-dimensional object(s) in the provisionally selected state. When the predetermined time has not elapsed (No at Step S303), Step S304 is not executed. The predetermined time may be a sufficiently short time, such as 0.1 seconds.

Subsequently, at Step S305, the control unit 22 changes the three-dimensional object(s) in the selected state or in the provisionally selected state according to the movement of the detected first body and second body. The way to change the three-dimensional object is determined based on the acting data 24c. For example, the control unit 22 changes the page(s) of the book in the selected state or in the provisionally selected state to be raised in accordance with the movement of the first body and the second body. The control unit 22 then re-executes Step S301 and the subsequent steps.

When the difference between the distances is larger than the threshold (Yes at Step S302), at Step S306, the control unit 22 determines whether the three-dimensional object(s) displayed between the first body and the second body is in the provisionally selected state.

When the three-dimensional object(s) is in the provisionally selected state (Yes at Step S306), at Step S307, the control unit 22 cancels the provisionally selected state of the three-dimensional object(s). At Step S308, the control unit 22 reversely changes and puts the three-dimensional object(s) back in the original state. Then, the control unit 22 terminates the holding operation detecting processing.

When the three-dimensional object(s) is not in the provisionally selected state, that is, when in the selected state (No at Step S306), at Step S309, the control unit 22 determines whether a selected range of the three-dimensional object(s) can be maintained or changed in accordance with the change of the distance between the first body and the second body.

When the distance between the first body and the second body is shortened, the selected range of the three-dimensional object(s) is maintained or reduced. To be specific, when there is one three-dimensional object in the selected state, even if the distance between the first body and the second body is shortened, the three-dimensional object(s) remains in the selected state. When there is a plurality of three-dimensional objects in the selected state, the number of the three-dimensional objects in the selected state is decreased as the distance between the first body and the second body becomes shorter. However, at least one three-dimensional object remains in the selected state. For example, when the pages of the book are held with the fingers, the control unit 22 decreases the number of held pages as the fingers get closer. However, at least one page is maintained in the held state.

Meanwhile, when the distance between the first body and the second body is enlarged, there is a case where the selected range of the three-dimensional object cannot be maintained or changed. To be specific, when a three-dimensional object(s) not in the selected state is positioned between the first body and the second body because the distance between the first body and the second body is enlarged, the selected range is expanded. In this case, the three-dimensional object(s) not in the selected state is changed to be in the selected state. When there is no three-dimensional object not in the selected state between the first body and the second body moved away from each other, and a gap between the three-dimensional object(s) in the selected state and the first body or the second body becomes larger than a predetermined size, the selected range cannot be maintained or changed. When it is determined that the selected range cannot be maintained or changed, the three-dimensional object(s) in the selected state is released.

For example, the pages of the book are held by the fingers, the control unit 22 increases the number of held pages as the distance between the fingers is expanded. When there is no more page to be held, and a gap between the held pages and any of the fingers becomes larger than a predetermined size, the control unit 22 determines that the selected range cannot be maintained or changed.

When the selected range of the three-dimensional object(s) can be maintained or changed in accordance with the change of the distance between the first body and the second body (Yes at Step S309), then at Step S310, the control unit 22 maintains or changes the selected range of the three-dimensional object(s) in accordance with the change of the distance between the first body and the second body. The control unit 22 re-executes Step S301 and the subsequent steps.

When the selected range of the three-dimensional object(s) cannot be maintained or changed in accordance with the change of the distance between the first body and the second body (No at Step S309), then at Step S311, the control unit 22 cancels the selected state of the three-dimensional object(s). At Step S312, the control unit 22 changes the three-dimensional object(s) according to the status at releasing. The way of changing the three-dimensional object(s) is determined based on the acting data 24c. For example, the control unit 22 changes a page of the book in the selected state to be turned according to the gravity. The control unit 22 terminates the holding operation detecting processing.

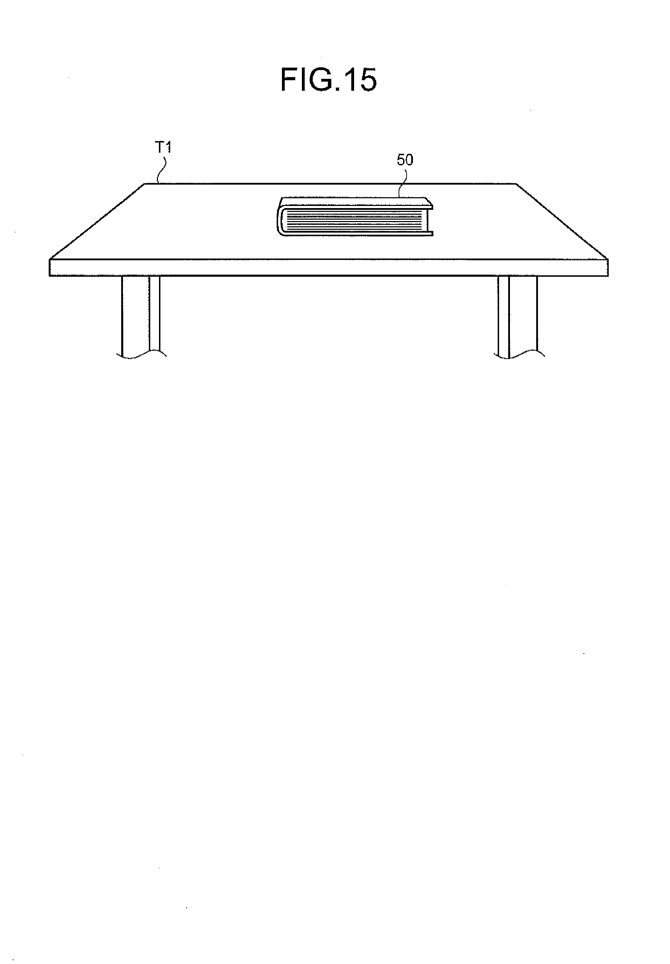

Then, a specific example of control in the viewing function of a book will be described with reference to FIG. 15 to 29. For the sake of simplicity, description of the provisionally selected state is omitted.

FIG. 15 is a diagram illustrating one of examples of a closed book. In FIG. 15, the display device 1 stereoscopically displays a book 50 on the table T1. In this example, the book 50 is closed. The appearance of the book 50 is determined based on the object data 24b. When the thickness of the book 50 is smaller than a predetermined value if the book 50 is faithfully displayed according to the object data 24b, the display device 1 may correct the thickness of the pages so that the thickness of the book 50 becomes the predetermined value or more. With an increase in the thickness of the book 50, the user can easily perform operation of the book 50.

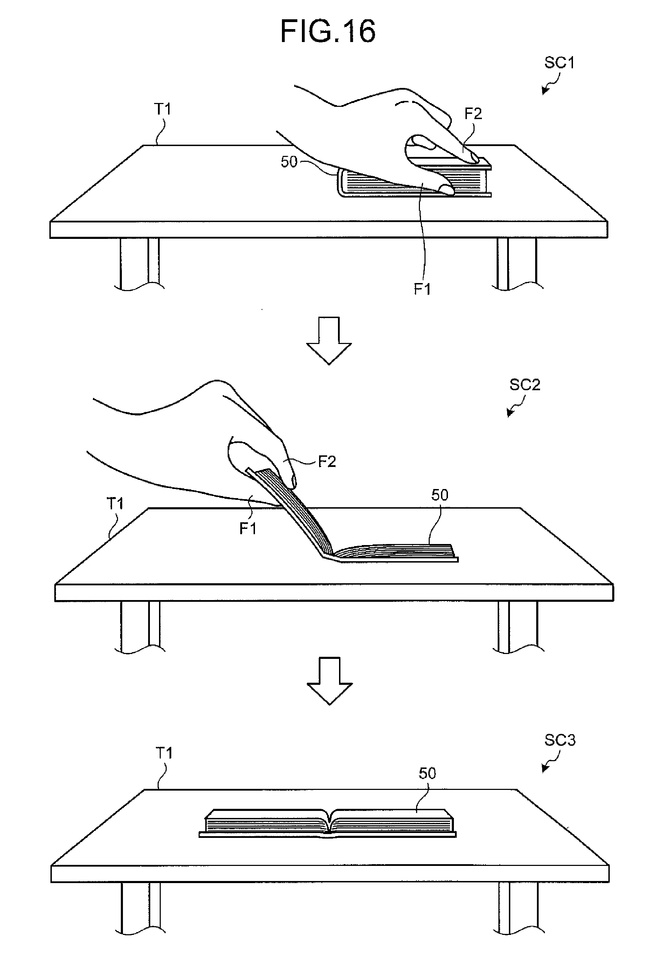

FIG. 16 is a diagram illustrating one of examples of control of page turning. At Step SC1 illustrated in FIG. 16, the user moves the finger F1 and the finger F2 such that the front cover and the pages of the book 50 are positioned between the finger F1 and the finger F2. When it is detected that the front page and the pages are positioned between the finger F1 and the finger F2, the display device 1 causes the front cover and the pages positioned between the finger F1 and the finger F2 to be in the selected state.

Subsequently, at Step SC2, the user moves the finger F1 and the finger F2 in the opening/closing direction of the book 50 until the finger F1 and the finger F2 cross the connected portion of the pages while keeping the interval of the finger F1 and the finger F2 substantially constant. When such operations of the finger F1 and the finger F2 are detected, the display device 1 changes the front cover and the pages in the selected state according to the acting data 24c. To be specific, the display device 1 changes an angle of the front cover and the pages in the selected state in accordance with the movement of the finger F1 and the finger F2.

In the above state, when the user expands the distance between the finger F1 and the finger F2, or moves the finger F1 and the finger F2 away from the connected portion of the pages and causes the front cover and the pages not to be positioned between the finger F1 and the finger F2, the front cover and the pages in the selected state are released. As a result, the display device 1 changes the book 50 according to the acting data 24c. To be specific, as illustrated in Step SC3, the display device 1 changes the book 50 such that an inner end page of the pages in the selected state comes to the top. The display device 1 displays, on surfaces of opened pages of the book 50, a text, an image, and the like corresponding to the pages.

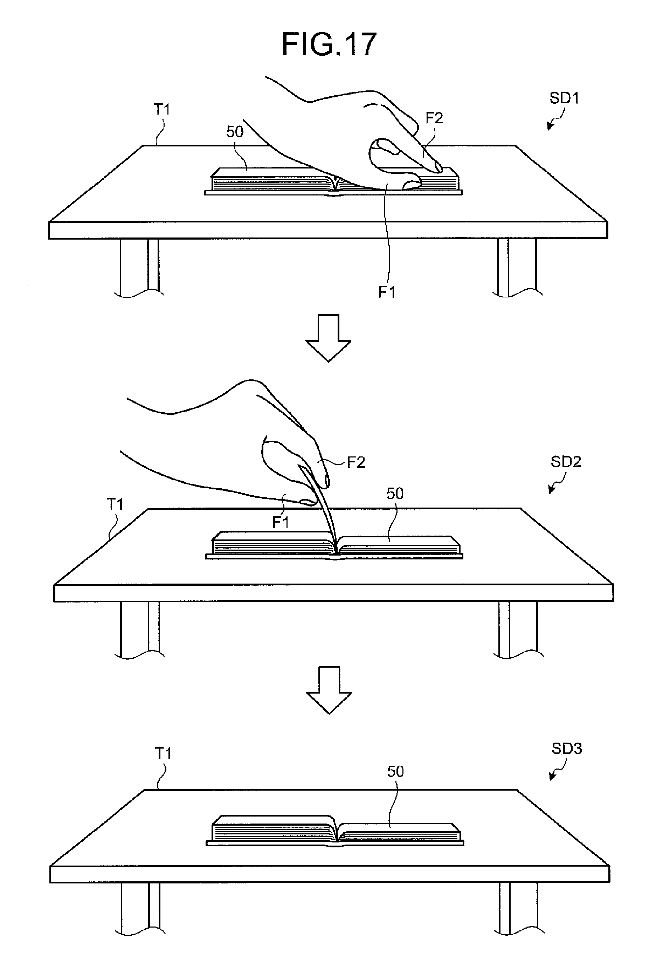

FIG. 17 is a diagram illustrating another example of the control of page turning. At Step SD1 illustrated in FIG. 17, the book 50 is already displayed in an opened state by the control illustrated in FIG. 16. Then, the user moves the finger F1 and the finger F2 such that pages including the opened page are positioned between the finger F1 and the finger F2. When it is detected that the pages are positioned between the finger F1 and the finger F2, the display device 1 causes the pages positioned between the finger F1 and the finger F2 to be in the selected state.

Subsequently, at Step SD2, the user moves the finger F1 and the finger F2 in the opening/closing direction of the book 50 until the finger F1 and the finger F2 cross the connected portion while keeping the interval of the finger F1 and the finger F2 substantially constant. When such operations of the finger F1 and the finger F2 are detected, the display device 1 changes the pages in the selected state according to the acting data 24c. To be specific, the display device 1 changes the angle of the pages in the selected state in accordance with the movement of the finger F1 and the finger F2.

At this time, the display device 1 may change the way of changing the pages in the selected state depending on the thickness (rigidity) of the pages. For example, when the pages are thicker than a threshold (when the rigidity is high), the display device 1 may change the angle without bending the pages. When the pages are thicker than the threshold (when the rigidity is high), the display device 1 may restrict the change of the pages such that the angle of the pages is changed only when the bodies that hold the pages in the selected state are moved to draw an arc around the connected portion of the pages as a revolving axis. When the pages are thinner than the threshold (when the rigidity is low), the display device 1 may bend the pages in accordance with the gravity and the movement of the bodies that hold the pages in the selected state.

In the state of Step SD2, when the user expands the distance between the finger F1 and the finger F2, or moves the finger F1 and the finger F2 away from the connected portion of the pages and causes the pages not to be positioned between the finger F1 and the finger F2, the pages in the selected state are released. As a result, the display device 1 changes the book 50 according to the acting data 24c. To be specific, as illustrated in Step SD3, the display device 1 changes the book 50 such that an inner end page of the pages in the selected state comes to the top. The display device 1 displays, on surfaces of opened pages of the book 50, a text, an image, and the like corresponding to the pages.

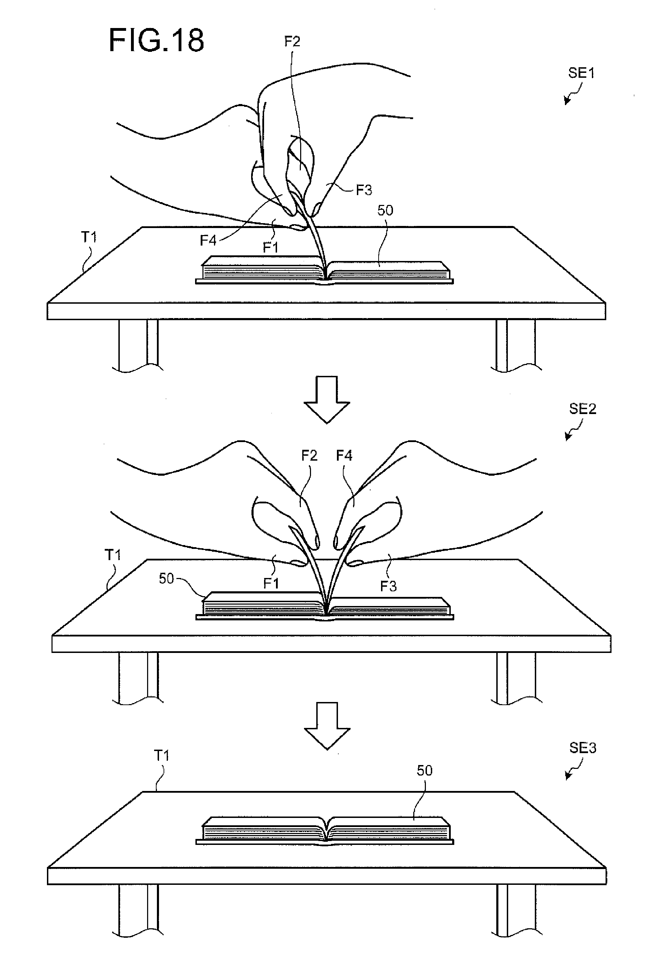

FIG. 18 is a diagram illustrating still another example of the control of page turning. At Step SE1 illustrated in FIG. 18, a plurality of pages is being turned by the control illustrated in FIG. 17. The user moves a finger F3 and a finger F4 such that parts of the pages in the selected state are positioned between the finger F3 and the finger F4. When it is detected that the pages are positioned between the finger F3 and the finger F4, the display device 1 associates the pages positioned between the finger F3 and the finger F4 with the finger F3 and the finger F4.

Subsequently, at Step SE2, the user moves the finger F3 and the finger F4 in the opening/closing direction of the book 50 until the finger F3 and the finger F4 cross the connected portion of the pages while keeping an interval of the finger F3 and the finger F4 substantially constant. When such operations of the finger F3 and the finger F4 are detected, the display device 1 changes the pages in the selected state according to the acting data 24c. To be specific, the display device 1 changes the angle of the pages associated with the finger F3 and the finger F4, of the pages in the selected state, in accordance with the movement of the finger F3 and the finger F4.

In Step SE2, when the user expands the distance between the finger F1 and the finger F2, or moves the finger F1 and the finger F2 away from the connected portion of the pages and causes the state in which the pages are not positioned between the finger F1 and the finger F2, the pages between the finger F1 and the finger F2 are released. Further, at Step SE2, when the user expands the distance between the finger F3 and the finger F4, or moves the finger F3 and the finger F4 away from the connected portion of the pages, and causes the pages not to be positioned between the finger F3 and the finger F4, the pages between the finger F3 and the finger F4 are released. As a result, the display device 1 changes the book 50 according to the acting data 24c. To be specific, as illustrated in Step SE3, the display device 1 changes the book 50 such that boundary pages between the pages between the finger F1 and the finger F2, and the pages between the finger F3 and the finger F4 come to the top. The display device 1 displays, on surfaces of the opened pages of the book 50, a text, an image, and the like corresponding to the pages.

As illustrated in FIGS. 16 to 18, the display device 1 enables the user to hold the pages and open the book. As a result, the user can not only turn the pages one by one and read the book from the beginning, but also can easily find a desired place from an electronic publication by the operation similar to the operation with respect to a real book.

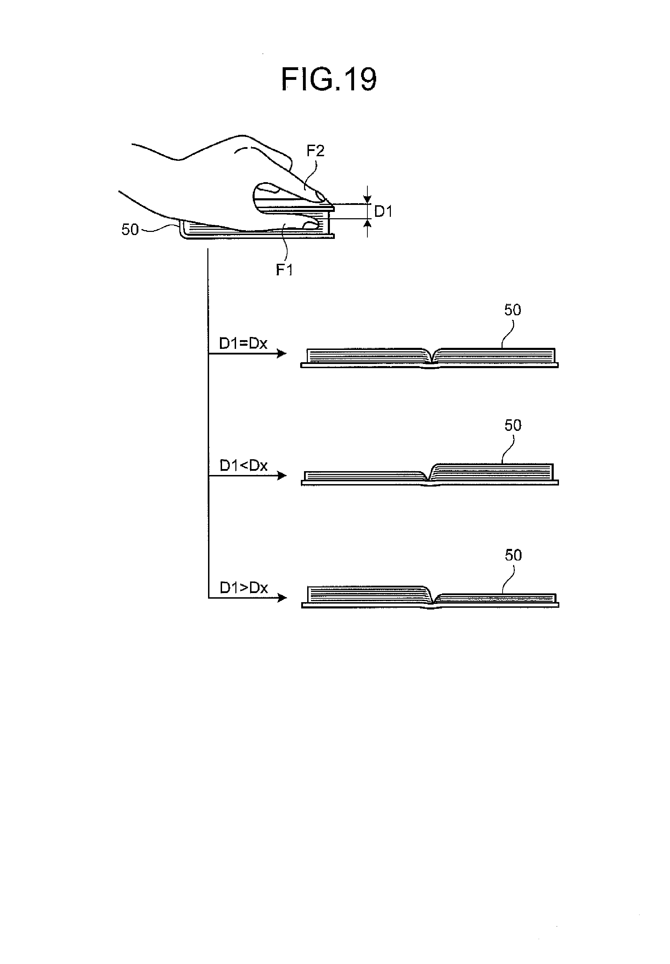

The number of turned pages is determined according to the distance between the bodies that select the pages. FIG. 19 is a diagram illustrating relationship between the number of turned pages and the distance between the bodies. As illustrated in FIG. 19, when the distance D1 between the finger F1 and the finger F2 that select the pages is shorter than a distance Dx, the number of turned pages with the distance D1 is smaller than that with the distance Dx. Meanwhile, when the distance D1 between the finger F1 and the finger F2 that select the pages is longer than the distance Dx, the number of turned pages with the distance D1 is larger than that with the distance Dx. As described above, the display device 1 increases the number of turned pages as the distance D1 becomes longer, as long as a gap is not caused between the fingers and the book 50.

As described above, the display device 1 changes the number of turned pages according to the distance D1, whereby the user can turn an arbitrary number of pages.

when the display device 1 causes the number of pages corresponding to the distance D1 to be in the selected state, and thereafter the distance D1 is changed within a range in which the selected range can be changed, the display device 1 changes the number of pages in the selected state according to the changed distance D1. It is favorable that the display device 1 presents a range of the selected pages to the user.

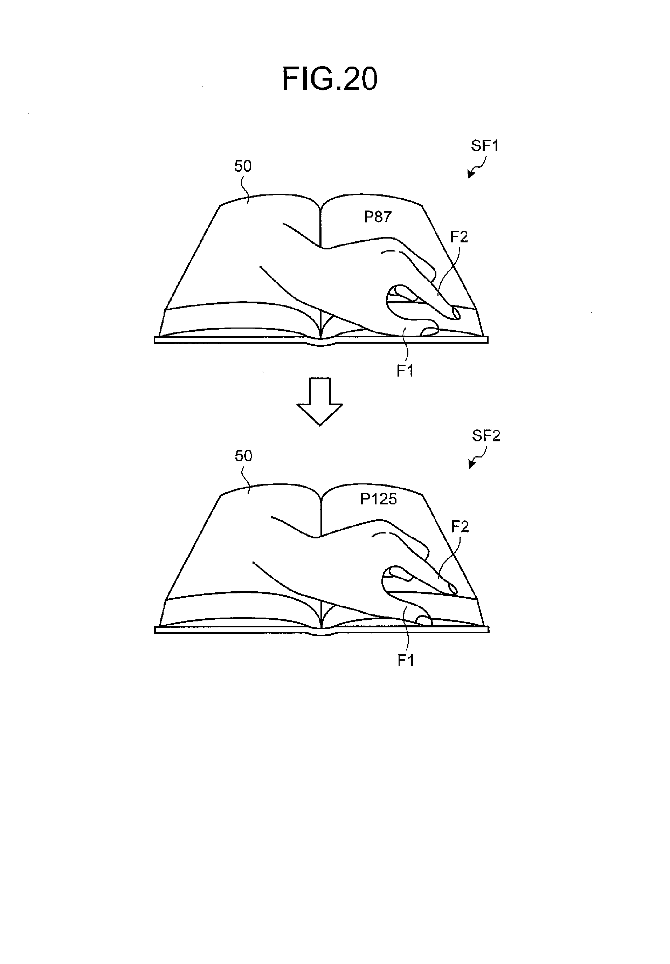

FIG. 20 is a diagram illustrating one of examples of presenting the range of the selected pages to the user. At Step SF1 illustrated in FIG. 20, the user moves the finger F1 and the finger F2 such that pages including the opened page are positioned between the finger F1 and the finger F2. When it is detected that the pages are positioned between the finger F1 and the finger F2, the display device 1 causes the pages positioned between the finger F1 and the finger F2 to be in the selected state. Further, the display device 1 displays a page number (87) of an end page of the pages in the selected state at an opposite side to the opened page. In the example illustrated in FIG. 20, the page number is displayed in the opened page. However, the position where the page number is displayed can be any position as long as the position can be seen by the user.

Subsequently, at Step SF2, the user expands the distance between the finger F1 and the finger F2 without making a gap between the fingers and the book 50. As a result, the display device 1 increases the number of pages in the selected state. Further, the display device 1 again displays the page number (125) that indicates the range of the pages in the selected state. As described above, the display device 1 presents the range of the selected pages to the user, whereby the user can easily adjust the range of the pages to be turned.

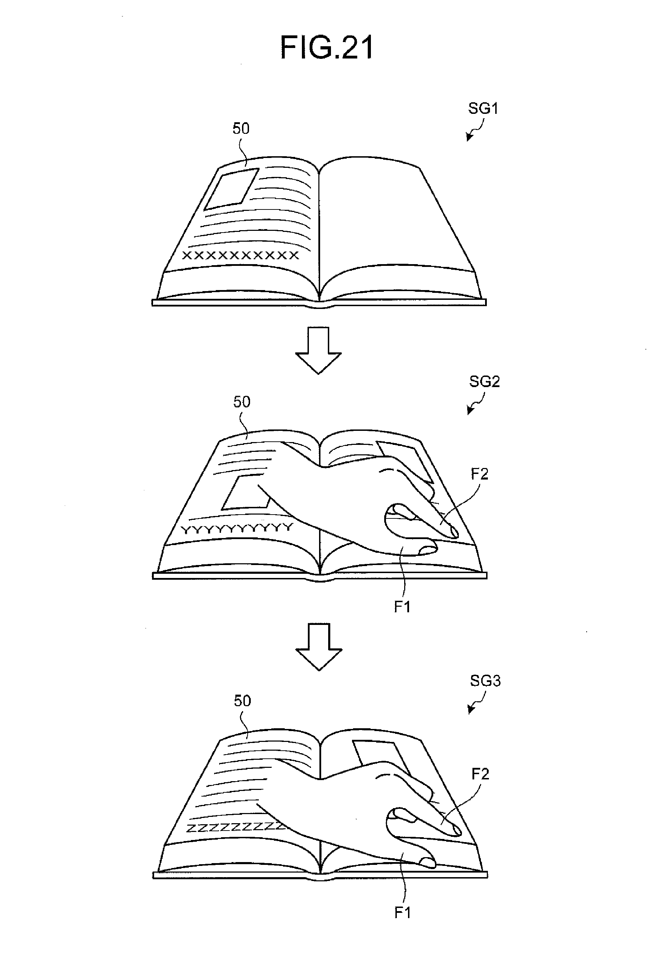

In FIG. 20, the page number is displayed in order to present the range of the selected pages to the user. However, the number of pages in the selected state or contents of the pages may be displayed in place of or in addition to the page number. FIG. 21 is a diagram illustrating one of examples of displaying the contents of the pages in order to present the range of the selected pages to the user.

At Step SG1 illustrated in FIG. 21, a text, an image, and the like corresponding to the pages are displayed on the opened pages of the book 50. Then, at Step SG2, the user moves the finger F1 and the finger F2 such that the pages including the opened page are positioned between the finger F1 and the finger F2. When it is detected that the pages are positioned between the finger F1 and the finger F2, the display device 1 causes the pages positioned between the finger F1 and the finger F2 to be in the selected state. Further, the display device 1 displays a text, an image, and the like corresponding to pages that are displayed when the pages in the selected state are turned. In the example illustrated in FIG. 21, contents of the opened pages are replaced. However, the size and position where the contents of the pages are displayed may be any size and position as long as the contents can be seen by the user.

Subsequently, at Step SG3, the user expands the distance between the finger F1 and the finger F2 without making a gap between the fingers and the book 50. As a result, the display device 1 increases the number of pages in the selected state. Further, the display device 1 again displays the text, the image, and the like corresponding to the pages that are displayed when the pages in the selected state are turned. As described above, the display device 1 presents the contents of the pages to the user, whereby the user can easily grasp which page can be viewed by turning the pages.

To adjust the number of pages in the selected state, a moving speed of the finger F1 and the finger F2 may be used, as well as the distance between the finger F1 and the finger F2. To be specific, when the moving speed of the finger F1 and the finger F2 is faster than a threshold, the amount of change of the number of pages in the selected state with respect to the amount of change of the distance is increased. Meanwhile, when the moving speed of the finger F1 and the finger F2 is slower than the threshold, the amount of change of the number of pages in the selected state with respect to the amount of change of the distance is decreased. As described above, by using the moving speed of the finger F1 and the finger F2, the user can easily adjust the number of pages in the selected state to be an intended value. As the moving speed of the finger F1 and the finger F2 referred to here, it is favorable to use a faster one of a moving speed of the finger F1 and a moving speed of the finger F2.

As described above, the operation of collectively turning a plurality of pages has been described. The display device 1 may receive operation of turning pages one by one. For example, when an operation in which a finger or the like touching one of the opened pages moves toward the other page has been detected, one sheet of the touched page may be turned. This operation mimics operation of turning a real thin sheet of paper.

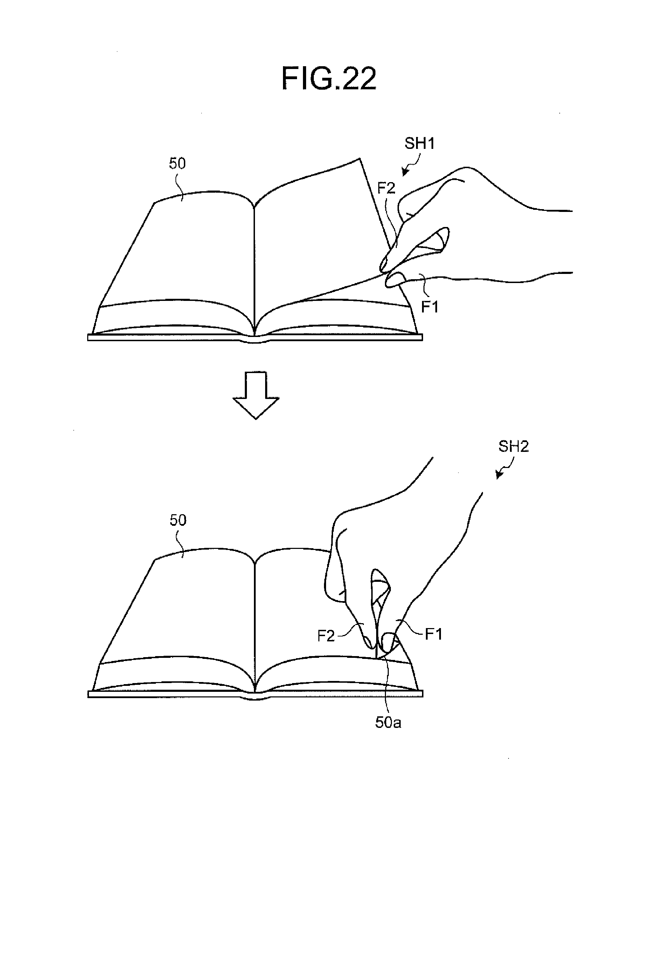

The display device 1 may receive operation other than the turning operation, as operation related to pages. For example, the display device 1 may receive operation of putting a mark on a page, as the operation related to pages. FIG. 22 is a diagram illustrating one of examples of operation of putting a mark on a page. At Step SH1 illustrated in FIG. 22, the user holds a corner of one sheet of page with the finger F1 and the finger F2. Then, at Step SH2, the user moves the finger F1 and the finger F2 to fold back the held portion.

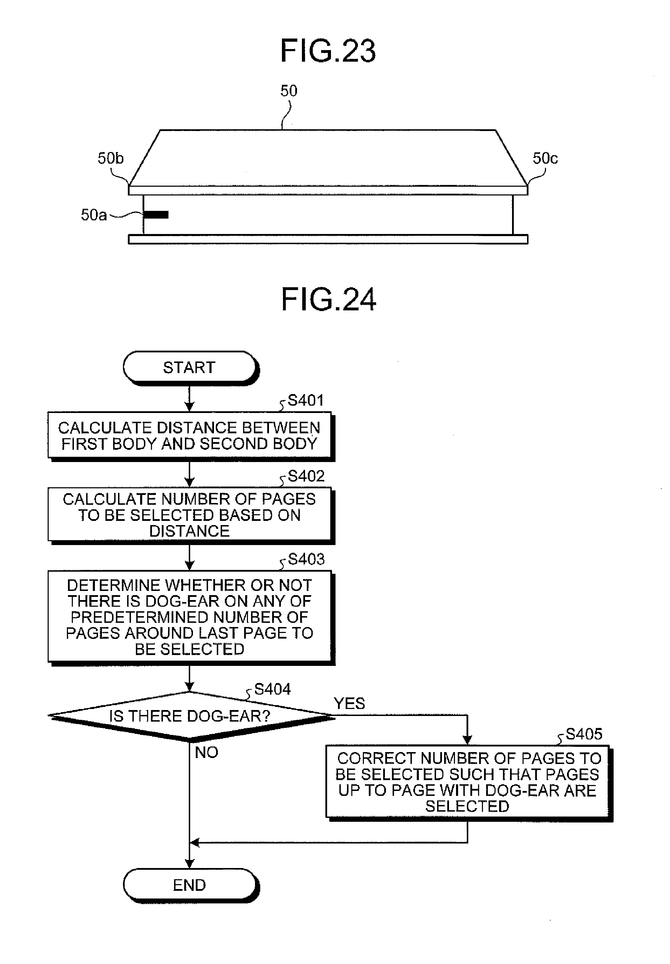

When the operation of folding back a part of a page is thus detected, the display device 1 keeps the portion in a folded back state, as a dog-ear 50a. Then, the display device 1 records the page provided with the dog-ear 50a, in the object data 24b. As illustrated in FIG. 23, the display device 1 favorably displays the dog-ear 50a in a style different from other portions by changing the color or brightness so that the user can grasp the position of the dog-ear 50a even if the book 50 is closed. As described above, the display device 1 sets the folding back according to the operation of the user, whereby the user can put a mark on the page or the like that the user wants to read again later.

A plurality of dog-ears 50a can be set to one book 50. When the thickness of the pages is thicker than a threshold (when the rigidity is high), the display device 1 may not provide the dog-ear even if the operation of folding back a part of the pages is detected.

The display device 1 favorably adjusts the range of selected pages so that the user can easily view the page to which the dog-ear 50a is set. FIG. 24 is a flowchart illustrating one of examples of a processing procedure of adjusting the range of selected pages. When it is detected that pages are displayed between the first body and the second body, then at Step S401, the control unit 22 of the display device 1 calculates the distance between the first body and the second body. Then, at Step S402, the control unit 22 calculates the number of pages to be selected based on the calculated distance.

Subsequently, at Step S403, the control unit 22 determines whether or not there is a dog-ear on any of a predetermined number of pages around the last page to be selected. When there is a dog-ear (Yes at Step S404), then at Step S405, the control unit 22 corrects the number of pages to be selected such that pages up to the page with the dog-ear are selected. When there is a plurality of pages with a dog-ear in a predetermined number of pages around the last page to be selected, the control unit 22 corrects the number of pages to be selected such that pages up to a page closest to the held last page are selected, of the pages with a dog-ear.

When there is no dog-ear on any of a predetermined number of pages around the last page to be selected (No at Step S404), the control unit 22 selects pages based on the number of pages calculated at Step S402

The adjustment of the selected range as illustrated in FIG. 24 may be executed only when the operation of holding pages is performed in the vicinity of the corner where the dog-ear 50a is provided, like a corner 50b illustrated in FIG. 23. That is, when the operation of holding pages is performed in the vicinity of the corner where the dog-ear 50a is not provided, like a corner 50c, the selected range may not be adjusted. As described above, the display device 1 suppresses the adjustment of the selected range depending on the position where the pages are selected, whereby the user can easily refer to a predetermined number of pages around the page provided with the dog-ear 50a.

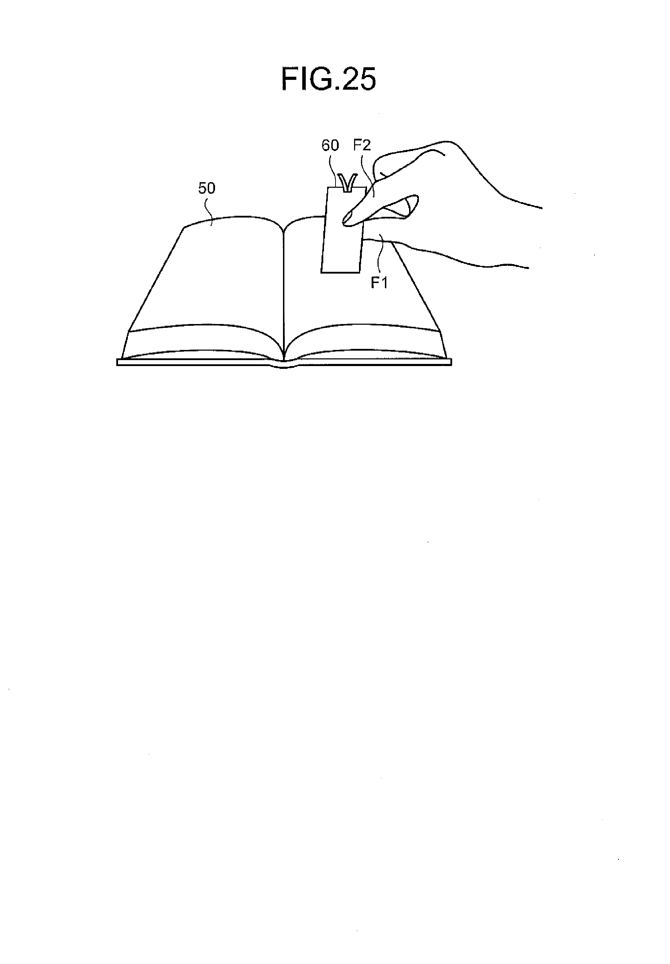

The display device 1 favorably adjusts the range of selected pages when operation of putting a bookmark 60 in a book, or operation of putting a bookmark string in a book has been detected, as illustrated in FIG. 25, similarly to the case of providing a dog-ear.

The display device 1 may receive operation of cutting off a page as the operation related to the pages.

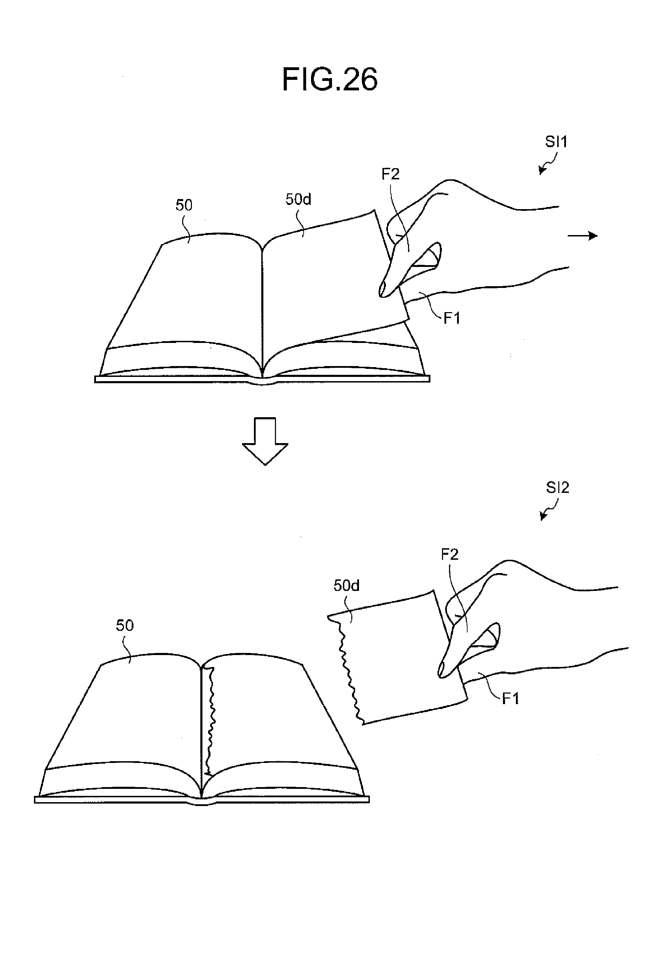

FIG. 26 is a diagram illustrating one of examples of the operation of cutting off a page. At Step SI1 illustrated in FIG. 26, the user holds an end portion of a page 50d with the finger F1 and the finger F2, and moves the finger F1 and the finger F2 such that the distance between the fingers and the connected portion of the pages becomes larger. When such operations of the finger F1 and the finger F2 have been detected, the display device 1 changes the page 50d according to the acting data 24c. To be specific, the display device 1 tears the page 50d and separates the page 50d from the book 50, as illustrated in Step SI2.

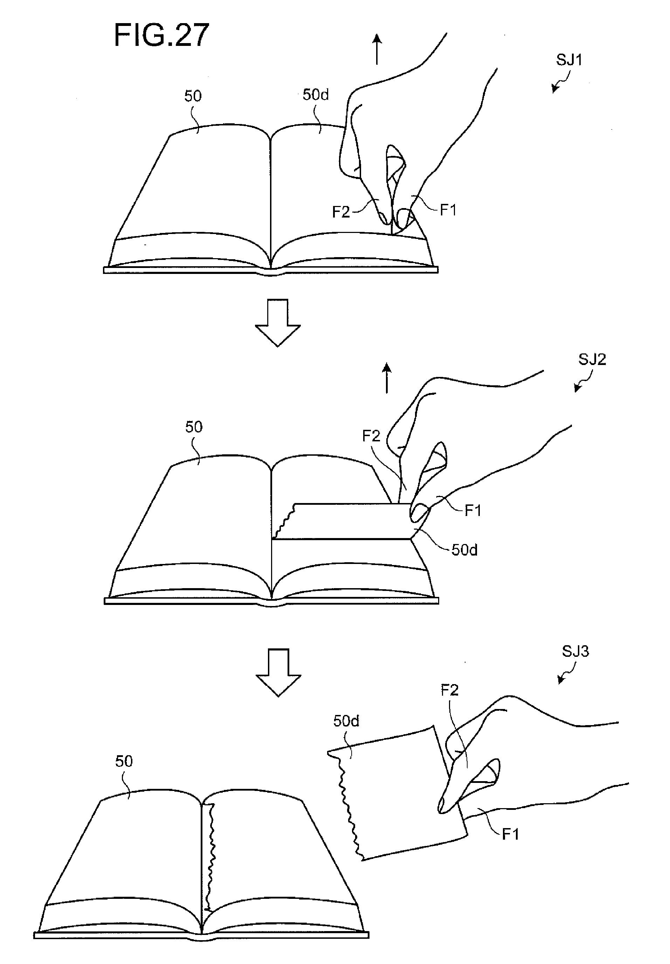

FIG. 27 is a diagram illustrating another example of the operation of cutting off a page. At Step SJ1 illustrated in FIG. 27, the user holds a corner of the page 50d with the finger F1 and the finger F2. Then, at Step SJ2, the user moves the finger F1 and the finger F2 in a direction perpendicular to the opening/closing direction of the book 50. When such operations of the finger F1 and the finger F2 have been detected, the display device 1 changes the page 50d according to the acting data 24c. To be specific, the display device 1 tears the page 50d in accordance with the movement of the finger F1 and the finger F2. As a result, when the user continues the movement of the finger F1 and the finger F2, the page 50d is torn, and is separated from the book 50, as illustrated in Step SJ3.

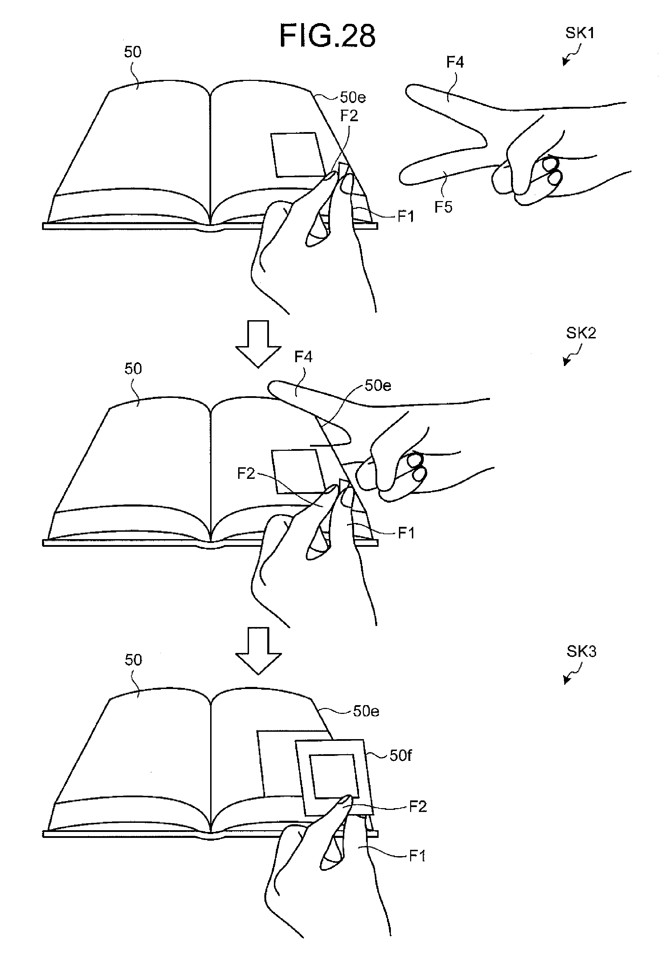

FIG. 28 is a diagram illustrating one of examples of operation of cutting off a part of a page. At Step SK1 illustrated in FIG. 28, the user holds a corner of a page 50e with the finger F1 and the finger F2, and forms the finger F4 and a finger F5 of the other hand into a shape of scissors. Then, at Step SK2, the user moves the finger F4 and the finger F5 to traverse the page 50e. When such operations of the finger F4 and the finger F5 have been detected, the display device 1 makes a cut into a portion traversed by the finger F4 and the finger F5. As a result, as illustrated in Step SK3, a page piece 50f that is a part of the page 50e is cut off along a moving path of the finger F4 and the finger F5, and is separated from the book 50. The operation of cutting off a part of a page is not limited to the operation of causing the fingers formed into a shape of scissors to traverse the page. For example, when an operation of tracing the page with a finger has been detected, the display device 1 may cut off the page piece along the traced path.

As illustrated in FIGS. 26 to 28, the display device 1 cuts off the entire or a part of a page, whereby the user can manage pages including interesting texts and the like in various file formats, separately from the book. When the thickness of the pages is thicker than a threshold (when the rigidity is high), the display device 1 may cause the pages not to be able to be cut off. Further, when the operation of cutting off a page has been detected, the display device 1 may separate a copy of the page from the book without tearing the pages. A page not to be torn may be a page, reproduction of which is prohibited in terms of management of copyright.

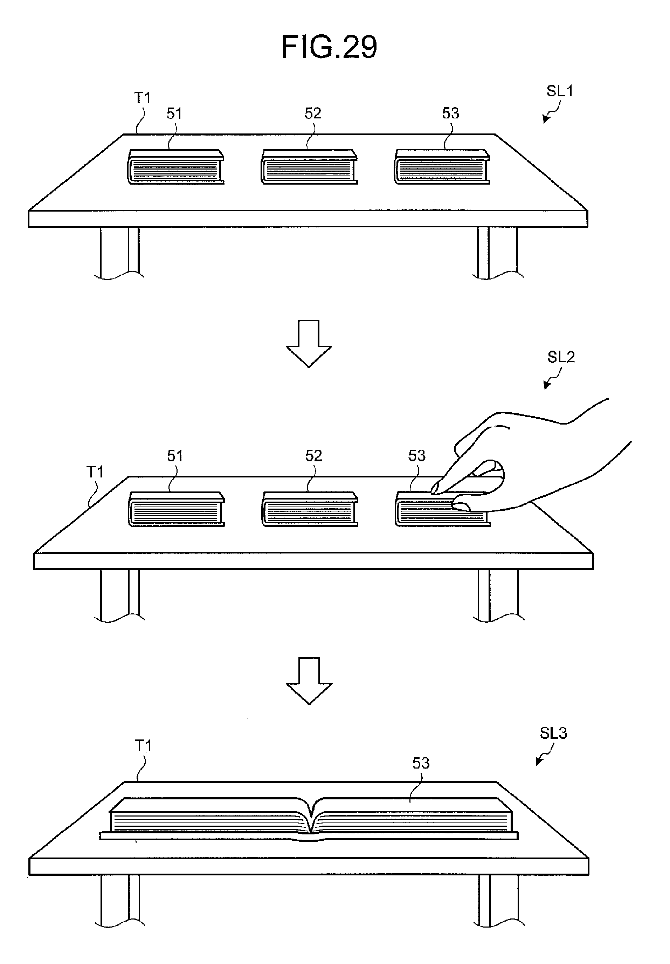

The display device 1 may stereoscopically display a plurality of books. FIG. 29 is a diagram illustrating one of examples of control of when a plurality of books is stereoscopically displayed. At Step SL1 illustrated in FIG. 29, the display device 1 stereoscopically displays three books 51 to 53 on the table T1. Then, at Step SL2, the user performs operation of opening the book 53 using the finger F1 and the finger F2.

When the operation of opening the book 53 has been detected, the display device 1 opens the book 53 according to the detected operation. At this time, at Step SL3, the display device 1 enlarges and displays the opened book 53 on a substantially entire surface of the table T1. As described above, the display device 1 enlarges and displays the opened book 53, whereby the user can easily view the pages of the book 53.

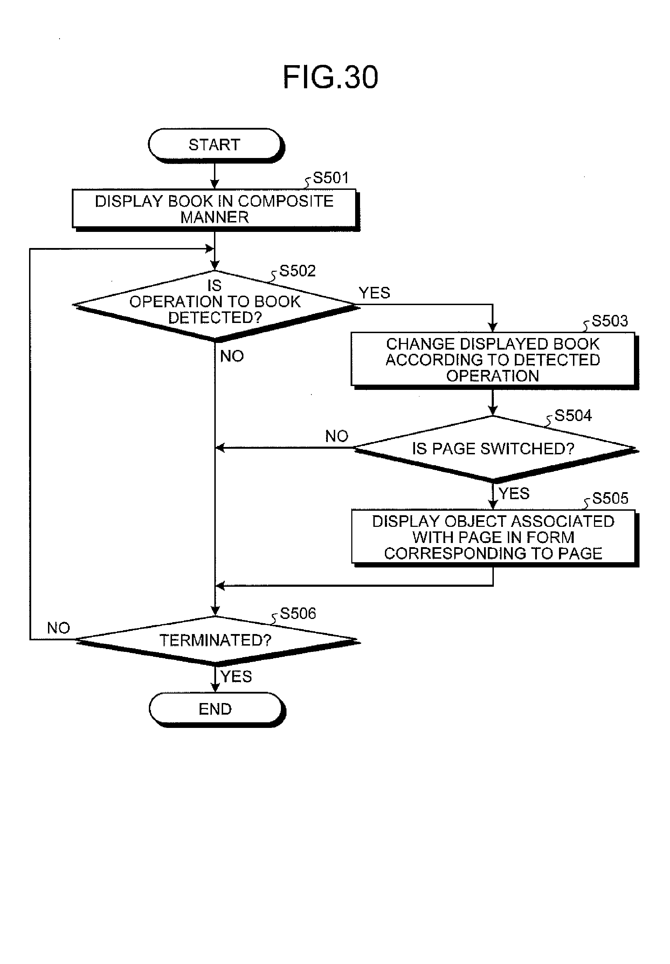

The display device 1 may display another object in association with a page. Display of another object associated with a page will be described with reference to FIGS. 30 to 38. FIG. 30 is a flowchart illustrating a processing procedure of processing of displaying another object in association with a page.

The processing procedure illustrated in FIG. 30 is realized by the control unit 22 executing the control program 24a. As illustrated in FIG. 30, first of all, at Step S501, the control unit 22 composites images including a book in the virtual space and an image in the real space, and displays composite images in the display units 32a and 32b. The appearance and contents of the book to be displayed is determined based on the object data 24b.

Subsequently, at Step S502, the control unit 22 determines whether operation to the book has been detected. The operation to the book is detected based on images captured by the imaging units 40 and 42. When the operation to the book has been detected (Yes at Step S502), then at Step S503, the control unit 22 changes the displayed book according to the detected operation. The way of changing the book in accordance with the detected operation is determined based on the acting data 24c.

Subsequently, at Step S504, the control unit 22 determines whether a page, contents of which are displayed, has been switched. When the page has been switched (Yes at Step S504), then at Step S505, the control unit 22 displays an object associated with the page, contents of which are newly displayed, in a form corresponding to the page.

When the operation to the book is not detected (No at Step S502), the displayed book is kept as it is. When the page has not been switched (No at Step S504), Step S505 is not executed.

Subsequently, at Step S506, the control unit 22 determines whether the processing is terminated. For example, when the user performs predetermined operation of instructing termination of the viewing function of the book, the control unit 22 determines the processing is terminated. When the processing is terminated (Yes at Step S506), the control unit 22 completes the processing procedure illustrated in FIG. 30. When the processing is not terminated (No at Step S506), the control unit 22 re-executes Step S502 and the subsequent steps.

As described above, when another object is displayed in association with a page, the display device 1 changes display of the object in accordance with switching of a page. Hereinafter, specific examples of displaying another object in association with a page will be described.

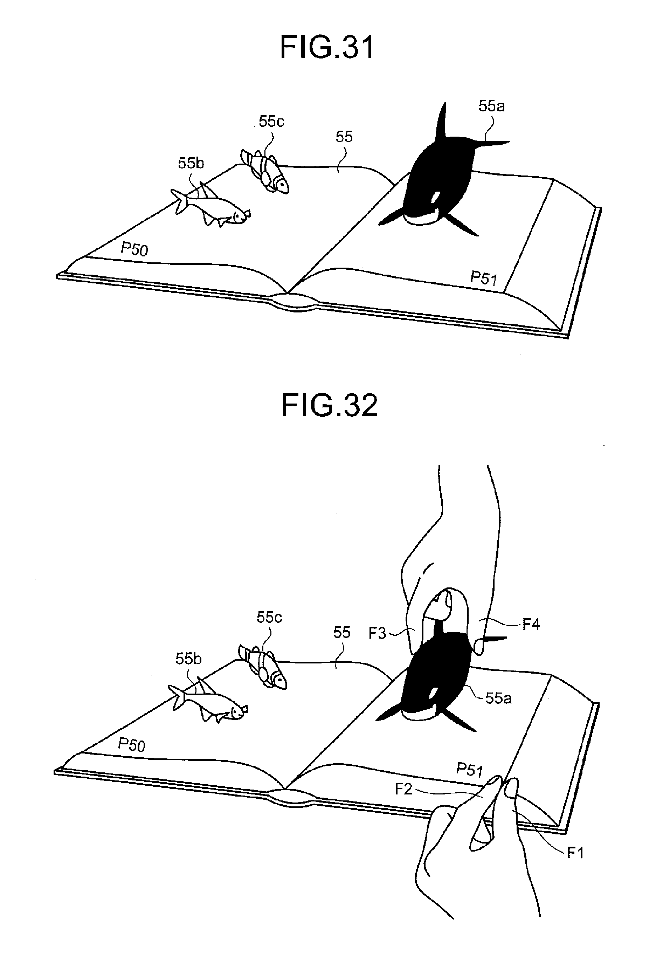

FIGS. 31 to 34 illustrate one of examples of three-dimensionally displaying marine organisms in association with pages. In the example illustrated in FIG. 31, a three-dimensional object 55a of an orca is associated with a page of a page number 51 of the book 55, and three-dimensional objects 55b and 55c of tropical fishes are associated with a page of a page number 50. When the pages of the page numbers 50 and 51 are displayed, the three-dimensional objects 55a to 55c are displayed as if they pop up from the pages. As described above, the three-dimensional objects associated with the pages of the book are displayed as if they pop up, whereby information can be provided to the user with more reality than an image or an illustration inserted into a real book.

Association between the page and the three-dimensional object can be arbitrary changed by the user. For example, as illustrated in FIG. 32, assume that the user turns one page using the finger F1 and the finger F2 while holding the three-dimensional object 55a with the finger F3 and the finger F4. When it is detected that the page has been turned in a state where the three-dimensional object is held, the display device 1 associates the held three-dimensional object with a newly displayed page.

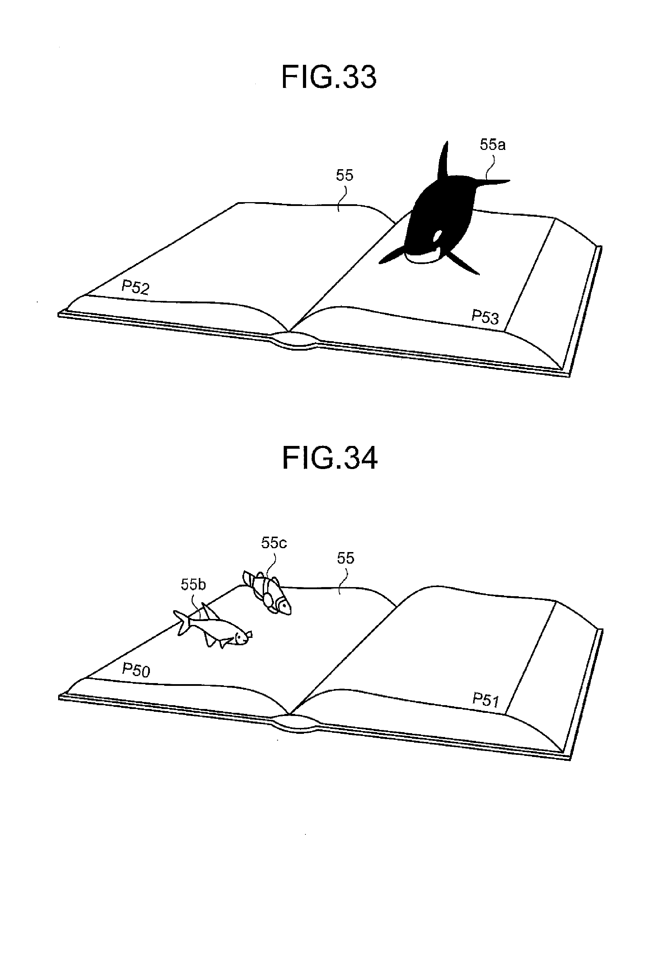

As a result, the three-dimensional object 55a is associated with a page of a page number 53, as illustrated in FIG. 33. Further, as illustrated in FIG. 34, when the user puts the page back and the page of the page number 51 is displayed, the three-dimensional object 55a is not displayed because the association of the three-dimensional object 55a with the page is changed.

While, in FIGS. 31 to 34, another object is associated with one surface of a page, another object may be associated with the front and back of a page. In this case, the display device 1 changes the way of displaying the object according to an angle of the page.

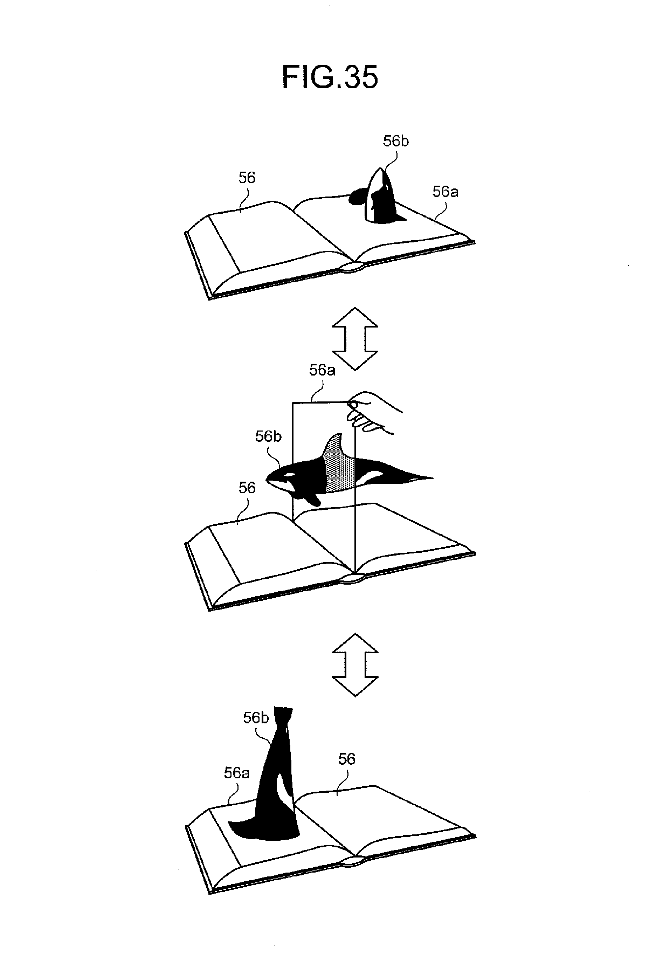

FIG. 35 illustrates one of examples of three-dimensionally displaying a marine organism in association with the front and back of a page. In the example illustrated in FIG. 35, a three-dimensional object 56b of an orca is associated with the front and back of a page 56a of a book 56. When one surface of the page 56a is displayed, the display device 1 three-dimensionally displays the three-dimensional object 56b as if an upper half of the orca pops up from the page 56a.

Then, when the user starts the operation of turning the page 56a, the display device 1 increases a displayed portion of the three-dimensional object 56b in accordance with the angle of the page 56a. At the timing when the page 56a becomes vertical, the entire three-dimensional object 56b is displayed. When the user continues the operation of turning the page 56a, the display device 1 decreases the displayed portion of the three-dimensional object 56b in accordance with the angle of the page 56a. When the page 56a is completely turned, the display device 1 three-dimensionally displays the three-dimensional object 56b as if the lower half of the orca pops up from the page 56a.

When the user turns the page 56a in the reverse direction, the display device 1 changes the three-dimensional object 56b in a reverse manner to the above description.

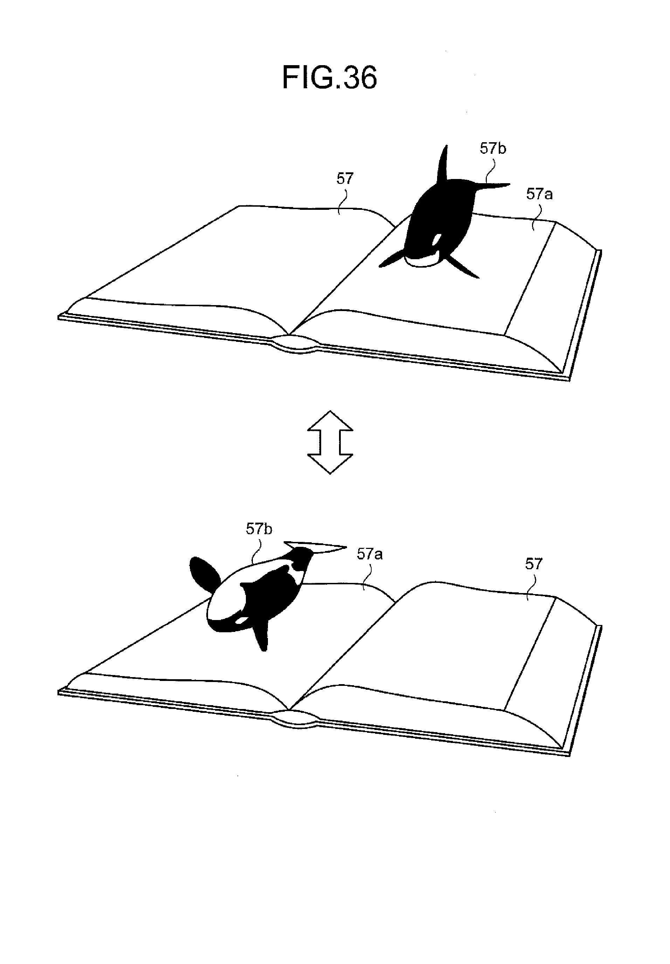

FIG. 36 illustrates another example of three-dimensionally displaying a marine organism in association with the front and back of a page. In the example illustrated in FIG. 36, a three-dimensional object 57b of an orca is associated with the front and back of a page 57a of a book 57. When one surface of the page 57a is displayed, the display device 1 three-dimensionally displays the three-dimensional object 57b such that a dorsal fin of the orca faces upward.

When the user starts the operation of turning the page 57a, the display device 1 causes the three-dimensional object 57b to rotate sideways in accordance with the angle of the page 57a. When the page 57a is completely turned, the display device 1 three-dimensionally displays the three-dimensional object 57b such that an abdomen of the orca faces upward. When the user turns the page 57a in a reverse direction, the display device 1 changes the three-dimensional object 57b in a reverse manner to the above-description.

As described above, the display device 1 changes the object in conjunction with the page turning, whereby the user can change the object as desired with familiar operation of page turning. That is, even a user who is not good at operation of information devices can realize complicated processing of turning a three-dimensional object only by turning pages.

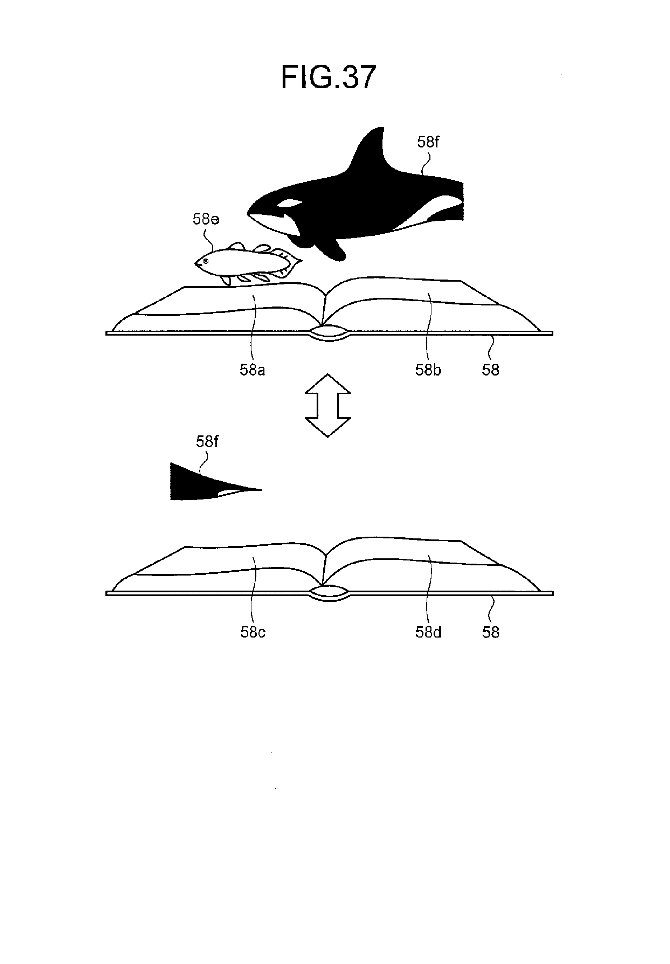

The display device 1 may associate an object with a plurality of pages. FIG. 37 illustrates one of examples of three-dimensionally displaying marine organisms in association with a plurality of pages. In the example illustrated in FIG. 37, a three-dimensional object 58e of a tropical fish and a three-dimensional object 58f of an orca are associated with four surfaces of page surfaces 58a to 58d of a book 58.

When the page surfaces 58a and 58b are displayed, the display device 1 displays the three-dimensional object 58e and the three-dimensional object 58f with the same scale. The difference in size between the tropical fish and the orca is large. Accordingly, when the page surfaces 58a and 58b are displayed, the entire three-dimensional object 58f is not displayed because a tail part of the orca extends outside of a visually recognized region. The portion of the three-dimensional object 58f, which extends outside of the visually recognized region, is displayed by turning the page and displaying the page surfaces 58c and 58d.

As described above, a plurality of organisms is displayed with the same scale, the user can easily grasp the difference in size between the organisms. Further, the user can view the portion extending outside of the visually recognized region and not displayed, by a familiar operation of turning a page.

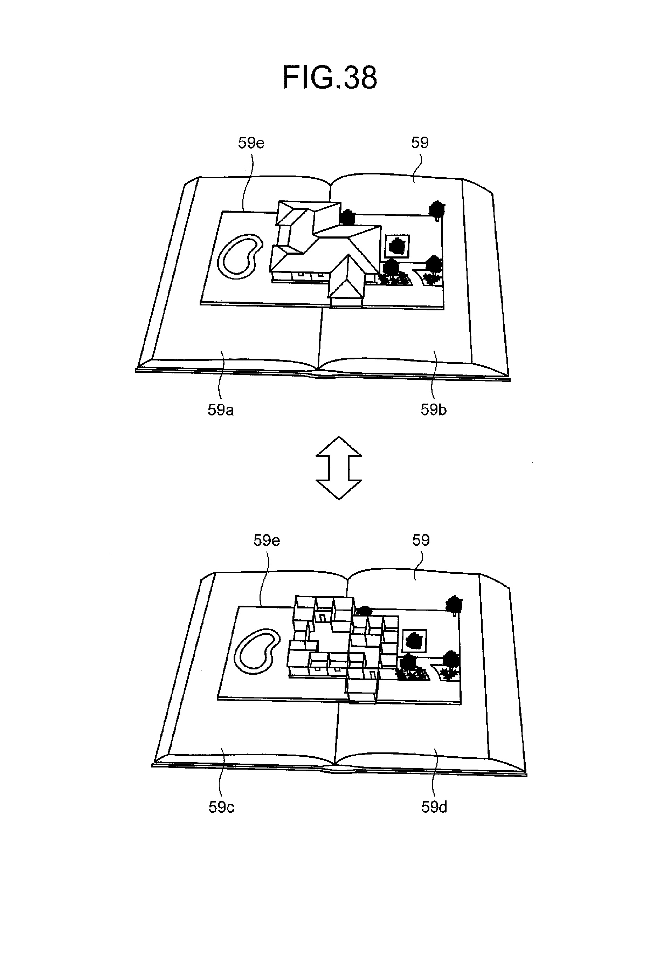

In one of examples illustrated in FIG. 38, a three-dimensional object 59e of a house is associated with four surfaces of page surfaces 59a to 59d of a book 59. When the page surfaces 59a and 59b are displayed, the display device 1 displays the entire three-dimensional object 59e. When the page surfaces 59c and 59d are displayed, the display device 1 displays the three-dimensional object 59e such that only the first floor of the house is displayed.

As described above, the display device 1 can set a cross section according to the number of turned pages, and display an object in a state of being cut in the set cross section. Such control can be applied to use of displaying a floor map of a building according to the number of turned pages or a use of displaying a cross section of a human body according to the number of turned pages.

The forms of the present invention described in the above embodiments can be arbitrary changed without departing from the gist of the present invention. For example, the control program 24a described in the above embodiments may be divided into a plurality of modules, or may be integrated with another program. In the above-described embodiments, the operation is performed with fingers with respect to the three-dimensional objects. However, stick-like bodies or the like can be used instead of the fingers.

In the above-described embodiments, as one of examples of an object displayed in association with a page, three-dimensional objects have been described. However, the object displayed in association with a page is not limited to the three-dimensional objects. For example, a moving image may be displayed in association with a page. When the moving image is displayed in association with a page, the display device 1 may reproduce a different chapter when a page is turned.

In the above-described embodiments, the display device has detected the operation to the three-dimensional object by itself. However, the display device may detect the operation to the three-dimensional object in cooperation with a server. In this case, the display device successively transmits information detected by the detection unit to the server, and the server detects operation and notifies the display device of the detection result. With such a configuration, the load of the display device can be decreased.

The display device 1 may limit the space where the operation to the three-dimensional object is detected to a range where hands of the user who wears the display device 1 can reach. When the space where the operation to the three-dimensional object is detected is thus limited, a load of calculation processing executed by the display device 1 in order to detect the operation can be decreased.

In the above-described embodiments, examples of using the present invention in order to realize the viewing function of a book has been described. However, what is viewed using the present invention is not limited to books. The present invention can be used for realizing the viewing function of various types of electronic publications including a pamphlet, a newspaper, and the like.

The operation to the three-dimensional object that can be realized by the present invention is not limited to the operation described in the above-described embodiments. With the control according to the present invention, for example, operation of selecting and taking out a book from a book shelf, operation of folding a newspaper, operation of performing writing in a book or the like using a writing implement, and the like can be realized.

### REFERENCE SIGNS LIST

- 1 to 4: DISPLAY DEVICE
- 1a: FRONT PORTION
- 1b: and 1c SIDE PORTION
- 4d: EXTERNAL DEVICE
- 13: OPERATING UNIT
- 22: CONTROL UNIT
- 24: STORAGE UNIT
- 24a: CONTROL PROGRAM
- 24b: OBJECT DATA
- 24c: ACTING DATA
- 24d: VIRTUAL SPACE DATA
- 25: DETECTION PROCESSING UNIT
- 26: DISPLAY OBJECT CONTROL UNIT
- 27: IMAGE COMPOSITE UNIT
- 32a and 32b: DISPLAY UNIT
- 40: and 42 IMAGING UNIT
- 44: DETECTION UNIT
- 46: DISTANCE MEASURING UNIT

## Claims

1. A display device, comprising:
a display unit configured to display an electronic publication by displaying images respectively corresponding to both eyes of a user by being worn;
a detection unit configured to detect a body that performs operation of turning a page of the publication; and
a control unit configured to cause the display unit to display a newly displayed page of pages of the publication according to a detection result of the detection unit.

2. The display device according to claim 1, wherein
the display unit stereoscopically displays the publication in a display space,
the detection unit detects positions of a plurality of the bodies in the display space, and
the control unit causes the display unit to stereoscopically display an object corresponding to the displayed page.

3. The display device according to claim 2, wherein the control unit changes a display style of the object according to an angle of the page corresponding to the object.

4. The display device according to claim 3, wherein the control unit rotates the object according to the angle of the page corresponding to the object.

5. The display device according to claim 3, wherein the control unit displays the object cut in a cross section corresponding to the angle of the page corresponding to the object.

6. The display device according to claim 3, wherein the control unit displays a part of the object corresponding to the angle of the page corresponding to the object.

7. A control system, comprising:
a terminal including
a display unit configured to display an electronic publication by displaying images respectively corresponding to both eyes of a user by being worn, and
a detection unit configured to detect a plurality of bodies that performs operation of turning a page of the publication; and
a control unit configured to control the terminal,
wherein
the control unit causes the display unit to display a newly displayed page of pages of the publication according to a detection result of the detection unit.

8. A control program that causes a display device including a display unit and a detection unit to execute:
displaying, by the display unit, an electronic publication by displaying images respectively corresponding to both eyes of a user by being worn;
detecting, by the detection unit, a body that perform operation of turning a page of the publication; and
displaying, by the display unit, a newly displayed page of pages of the publication according to a detection result of the detection unit.
